# EUROPEAN PATENT APPLICATION

(11) **EP 4 848 851 A1**
(43) Date of publication of application: **02.12.2026**
(21) Application number: 25751196.4
(22) Date of filing: 21.01.2025
(51) Int. Cl.: H04W 68/02, H04W 8/24

(54) **COMMUNICATION METHOD AND APPARATUS**

(30) Priority: 08.02.2024 CN 202410177348
(71) Applicant: Huawei Technologies Co., Ltd., Shenzhen, Guangdong 518129 (CN)
(72) Inventor: SENG, Shuming, Shenzhen, Guangdong 518129 (CN); LI, Chenwan, Shenzhen, Guangdong 518129 (CN); WANG, Yan, Shenzhen, Guangdong 518129 (CN)
(74) Representative: Huawei European IPR
(86) International application number: PCT/CN2025/073681
(87) International publication number: WO 2025/167594

(57) **Abstract**

A communication method and apparatus are disclosed. The method includes: sending a first message, where the first message is used to select or page at least one terminal device; receiving a first uplink message from a first terminal device and a second uplink message from a second terminal device; and sending a second message to a core network device, where the second message includes the first uplink message, the second uplink message, and first location information, and the first location information indicates a location of the first terminal device and the second terminal device. According to the foregoing procedure, an access network device may report first location information shared by a plurality of terminal devices to the network side via a single message. In this way, overhead for reporting location information can be reduced.

## Description

### CROSS-REFERENCE TO RELATED APPLICATIONS

This application claims priority to Chinese Patent Application No. 202410177348.1, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In wireless communication systems, internet of things (internet of things, IoT) technology has been introduced. In the IoT, terminal devices may function as tags (tags), and base stations may function as readers (readers). Tags can communicate with base stations. Tags are passive or semi-active devices, with typical application scenarios including logistics, warehousing, industrial manufacturing, identity identification, environment monitoring, and the like. In each instance, a large quantity of tags may access base station antennas. In some scenarios, a core network needs to determine the locations of the tags, and therefore the base station must report location information of each tag to the core network.

Due to the large amount of tag data, overhead for the base station to report location information is also high.

### SUMMARY

This application provides a communication method and apparatus to reduce overhead for reporting location information.

According to a first aspect, this application provides a communication method. The method is performed by an access network device or a module or a chip in an access network device. Herein, an example in which the access network device is the execution body is used for description. The method includes: sending a first message, where the first message is used to select or page at least one terminal device; receiving a first uplink message from a first terminal device, and receiving a second uplink message from a second terminal device; and sending a second message to a core network device, where the second message includes the first uplink message, the second uplink message, and first location information, and the first location information indicates a location of the first terminal device and the second terminal device.

According to a second aspect, this application provides a communication method. The method is performed by an access network device or a module or a chip in an access network device. Herein, an example in which the access network device is the execution body is used for description. The method includes: sending a first message, where the first message is used to select or page at least one terminal device; receiving N uplink messages from N terminal devices, where one of the N uplink messages is from one of the N terminal devices, and N is an integer greater than 1; and sending a second message to a core network device, where the second message includes the N uplink messages and first location information, and the first location information indicates a location of the N terminal devices.

According to the foregoing procedure, after obtaining uplink messages of a plurality of terminal devices, when reporting the plurality of uplink messages to a core network, the access network device may report first location information of the plurality of terminal devices to the network side via a single message. In this way, overhead for reporting location information can be reduced, and communication efficiency can be improved.

With reference to the first aspect or the second aspect, in a possible implementation, the method further includes: receiving a first service request from the core network device, where the first service request is used to request to perform a first service; and the first service includes one or more of the following: a paging service, a positioning service, a location reporting service, an inventory service, a sensing service, a command service, a read service, a write service, and a kill service.

In the foregoing solution, a service procedure of the first service is reused, and location information of a terminal device is reported in the service procedure, so that signaling overhead is reduced, and complexity of the terminal device is reduced.

With reference to the first aspect or the second aspect, in a possible implementation, the first location information includes at least one of the following: identification information of a transmission reception point TRP; identification information of a pico radio unit PRU; identification information of a head end; identification information of an antenna; identification information of a relay device; and an NR cell global identifier (cell global identifier, CGI), where the TRP, the PRU, the head end, or the antenna is configured to receive the N uplink messages, or the TRP, the PRU, the head end, or the antenna is configured to receive the first uplink message and the second uplink message; and the relay device is configured to forward the N uplink messages, or the relay device is configured to forward the first uplink message and the second uplink message.

In the foregoing solution, the TRP, the PRU, and the like correspond to one area in a cell, and the reported location information of the terminal device can be more accurate based on the identification information.

With reference to the first aspect or the second aspect, in a possible implementation, the first location information includes at least one of the following: area information corresponding to a TRP; area information corresponding to a PRU; area information corresponding to a head end; area information corresponding to an antenna; and area information corresponding to a relay device, where the TRP, the PRU, the head end, or the antenna is configured to receive the N uplink messages, or the TRP, the PRU, the head end, or the antenna is configured to receive the first uplink message and the second uplink message; and the relay device is configured to forward the N uplink messages, or the relay device is configured to forward the first uplink message and the second uplink message.

In the foregoing solution, the TRP, the PRU, and the like correspond to one area in a cell, and the reported location information of the terminal device can be more accurate based on the identification information.

With reference to the first aspect or the second aspect, in a possible implementation, an area corresponding to the area information is a part of a cell.

With reference to the first aspect or the second aspect, in a possible implementation, the first service request further includes first information, and the first information indicates to report location information of a terminal device.

With reference to the first aspect or the second aspect, in an implementation, the core network device may further send second information, where the second information indicates to measure a message or a signal of the terminal device. Optionally, the second information further indicates a measurement quantity. For example, the measurement quantity may include at least one of an angle, signal strength, and time of arrival.

With reference to the first aspect or the second aspect, in a possible implementation, the method further includes: measuring the first uplink message to obtain a first measurement result; and sending the first measurement result to the core network device, where the first measurement result is used to determine second location information of the first terminal device.

In the foregoing solution, the terminal device is positioned based on the measurement result, so that a positioning result is more accurate, and positioning precision is improved.

With reference to the first aspect or the second aspect, in a possible implementation, the method further includes: sending positioning configuration information, where the positioning configuration information is used to transmit a positioning signal; receiving at least one positioning signal from the first terminal device; measuring the at least one positioning signal to obtain a second measurement result; and sending the second measurement result to the core network device, where the second measurement result is used to determine third location information of the first terminal device.

With reference to the first aspect or the second aspect, in a possible implementation, the positioning configuration information includes at least one piece of the following information: a transmission periodicity of the positioning signal, a transmission count of the positioning signal, a positioning signal type, a transmission time period of the positioning signal, a transmission time offset of the positioning signal, a frequency of the positioning signal, and an absolute transmission time of the positioning signal.

In this implementation, the positioning configuration information indicates the positioning signal, so that the positioning signal can be accurately sent, thereby improving positioning reliability.

With reference to the first aspect or the second aspect, in a possible implementation, the at least one positioning signal includes a first positioning signal and a second positioning signal, the first positioning signal is determined based on a first carrier signal from a third terminal device, the second positioning signal is determined based on a second carrier signal from the third terminal device, and a frequency position of the first carrier signal is different from a frequency position of the second carrier signal.

According to a third aspect, this application provides a communication method. The method is performed by a core network device or a module or a chip in a core network device. Herein, an example in which the core network device is the execution body is used for description. The method includes: receiving a second message from an access network device, where the second message includes first location information, a first uplink message of a first terminal device, and a second uplink message of a second terminal device, and the first location information indicates a location of the first terminal device and the second terminal device. Alternatively, the second message includes N uplink messages and first location information, where the first location information indicates a location of N terminal devices.

In a possible implementation, the method further includes: sending a first service request to the access network device, where the first service request is used to request to perform a first service, and the first service includes one or more of the following: a paging service, a positioning service, a location reporting service, an inventory service, a sensing service, a command service, a read service, a write service, and a kill service.

In a possible implementation, the first location information includes at least one of the following: identification information of a transmission reception point TRP; identification information of a pico radio unit PRU; identification information of a head end; identification information of an antenna; identification information of a relay device; and an NR cell global identifier, where the TRP, the PRU, the head end, or the antenna is configured to receive the first uplink message and the second uplink message, and the relay device is configured to forward the first uplink message and the second uplink message.

In a possible implementation, the first location information includes at least one of the following: area information corresponding to a TRP; area information corresponding to a PRU; area information corresponding to a head end; area information corresponding to an antenna; and area information corresponding to a relay device, where
the TRP, the PRU, the head end, or the antenna is configured to receive the first uplink message and the second uplink message, and the relay device is configured to forward the first uplink message and the second uplink message.

In a possible implementation, an area corresponding to the area information is a part of a cell.

In a possible implementation, the first service request further includes first information, and the first information indicates to report location information of a terminal device in the cell.

In a possible implementation, the method further includes: receiving a first measurement result from the access network device, where the first measurement result is determined based on the first uplink message, and the first measurement result is used to determine second location information of the first terminal device.

According to a fourth aspect, this application provides a communication method. The method is performed by an access network device or a module or a chip in an access network device. Herein, an example in which the access network device is the execution body is used for description. The method includes: sending a first message, where the first message is used to select or page at least one terminal device; receiving a first uplink message from a first terminal device; and sending a second message to a core network device, where the second message includes the first uplink message and first location information, and the first location information indicates a location of the first terminal device.

In a possible implementation, the first location information includes at least one of the following: identification information of a transmission reception point TRP; identification information of a pico radio unit PRU; identification information of a head end; identification information of an antenna; identification information of a relay device; and an NR cell global identifier, where the TRP, the PRU, the head end, or the antenna is configured to receive the first uplink message, and the relay device is configured to forward the first uplink message.

In a possible implementation, the first location information includes at least one of the following: area information corresponding to a TRP; area information corresponding to a PRU; area information corresponding to a head end; area information corresponding to an antenna; and area information corresponding to a relay device, where the TRP, the PRU, the head end, or the antenna is configured to receive the first uplink message, and the relay device is configured to forward the first uplink message.

In a possible implementation, an area corresponding to the area information is a part of a cell.

According to a fifth aspect, this application provides a communication method. The method is performed by a core network device or a module or a chip in a core network device. Herein, an example in which the core network device is the execution body is used for description. The method includes: receiving a second message from an access network device, where the second message includes first location information and a first uplink message of a first terminal device, and the first location information indicates a location of the first terminal device.

In a possible implementation, the first location information includes at least one of the following: identification information of a transmission reception point TRP; identification information of a pico radio unit PRU; identification information of a head end; identification information of an antenna; identification information of a relay device; and an NR cell global identifier, where the TRP, the PRU, the head end, or the antenna is configured to receive the first uplink message, and the relay device is configured to forward the first uplink message.

In a possible implementation, the first location information includes at least one of the following: area information corresponding to a TRP; area information corresponding to a PRU; area information corresponding to a head end; area information corresponding to an antenna; and area information corresponding to a relay device, where the TRP, the PRU, the head end, or the antenna is configured to receive the first uplink message, and the relay device is configured to forward the first uplink message.

In a possible implementation, an area corresponding to the area information is a part of a cell.

According to a sixth aspect, this application further provides a communication apparatus. The communication apparatus can implement any method in any one of the first aspect to the fifth aspect. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus in performing a corresponding function of the access network device, the terminal device, or the core network device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal device

In a possible implementation, the communication apparatus includes corresponding functional modules respectively configured to implement the steps in the foregoing method. The function may be implemented by hardware, or may be implemented by executing corresponding software by hardware. The hardware or software includes one or more modules corresponding to the foregoing function.

In a possible implementation, a structure of the communication apparatus includes a processing unit and a communication unit. These units may perform corresponding functions in the foregoing method examples. For details, refer to descriptions in the method provided in any one of the first aspect to the fifth aspect. Details are not described herein.

According to a seventh aspect, a computer-readable storage medium is provided. The computer-readable storage medium stores a computer program or instructions. When the computer program or the instructions are executed by a processor, the method in any possible implementation of any one of the first aspect to the fifth aspect is implemented.

According to an eighth aspect, a computer program product storing instructions is provided. When a computer reads and executes the computer program product, the method in any possible implementation of any one of the first aspect to the fifth aspect is implemented.

According to a ninth aspect, a circuit is provided. The circuit is configured to perform the method in any possible implementation of any one of the first aspect to the fifth aspect, and the circuit may include a chip circuit. Optionally, the circuit may be further coupled to a memory.

According to a tenth aspect, a chip is provided. The chip includes a processor. When executing a computer program or instructions, the processor is configured to implement the method in any possible implementation of any one of the first aspect to the fifth aspect. Optionally, the chip may further include a memory. The chip may include a chip, or may include a chip and another discrete device.

According to an eleventh aspect, a communication apparatus is provided. The communication apparatus includes a processor. The processor implements, via a logic circuit or by executing a computer program or instructions, the method in any possible implementation of any one of the first aspect to the fifth aspect.

According to a twelfth aspect, a communication apparatus is provided. The communication apparatus includes a unit or a module configured to perform the method in any possible implementation of any one of the first aspect to the fifth aspect.

According to a thirteenth aspect, a communication apparatus is provided, and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement a functional module of the method in any possible implementation of any one of the first aspect to the fifth aspect via a logic circuit or by executing a computer program or instructions. Optionally, the communication apparatus further includes a memory, and the memory is configured to store a computer program or instructions.

According to a fourteenth aspect, an embodiment of this application further provides a communication system. The communication system includes an access network device configured to implement the method in any one of the first aspect and the possible implementations of the first aspect, and a core network device configured to implement the method in any one of the second aspect and the possible implementations of the second aspect.

### BRIEF DESCRIPTION OF DRAWINGS

FIG. 1 is a diagram of an architecture of a network device according to an embodiment of this application;
FIG. 2 is a diagram of a tag according to an embodiment of this application;
FIG. 3 is a diagram of a network architecture applicable to an embodiment of this application;
FIG. 4 is a diagram of a network architecture applicable to an embodiment of this application;
FIG. 5 is a diagram of a network architecture applicable to an embodiment of this application;
FIG. 6 is a diagram of a network architecture applicable to an embodiment of this application;
FIG. 7 is a diagram of a network architecture applicable to an embodiment of this application;
FIG. 8 is a diagram of a network architecture applicable to an embodiment of this application;
FIG. 9 is a diagram of a network architecture applicable to an embodiment of this application;
FIG. 10 is a schematic flowchart of a communication method according to an embodiment of this application;
FIG. 11 is a diagram of an area according to an embodiment of this application;
FIG. 12 is a diagram of an area according to an embodiment of this application;
FIG. 13 is a schematic flowchart of a communication method according to an embodiment of this application;
FIG. 14 is a schematic flowchart of a communication method according to an embodiment of this application;
FIG. 15 is a schematic flowchart of a communication method according to an embodiment of this application;
FIG. 16 is a diagram of a structure of a communication apparatus according to an embodiment of this application;
FIG. 17 is a diagram of a structure of a communication apparatus according to an embodiment of this application; and
FIG. 18 is a diagram of a structure of a communication apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely some but not all of embodiments of this application. In this application, the terms "first" and "second" and corresponding term numbers are intended to distinguish between similar objects but do not necessarily describe a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device. The method and an apparatus provided in embodiments of this application are based on a same or similar technical concept. Because problem resolving principles of the method and the apparatus are similar, mutual reference may be made to implementations of the apparatus and the method. Repeated descriptions are not provided again.

The method provided in embodiments of this application may be applied to various mobile communication systems, for example, internet of things (internet of things, IoT), narrowband internet of things (narrowband internet of things, NB-IoT), a 4th generation (4th generation, 4G) communication system (for example, long term evolution (long term evolution, LTE)), a 5th generation (5th generation, 5G) communication system (for example, 5G new radio (new radio, NR)), an LTE and NR hybrid architecture, or a new communication system emerging in 6G or future communication development. Alternatively, the communication system may include a machine to machine (machine to machine, M2M) network, a machine type communication (machine type communication, MTC) network, or another network. For example, the method provided in embodiments of this application may be applied to a communication system that supports an ambient internet of things (ambient IoT, AIoT) or an internet of things (IoT, IoT) technology.

The following first describes some terms in embodiments of this application, to facilitate understanding of a person skilled in the art.

In embodiments of this application, the access network device may be a device in a wireless network, and the access network device may also be referred to as a network apparatus or a radio access network device. For example, the access network device may be a radio access network (radio access network, RAN) node that connects a terminal device to the wireless network, and may also be referred to as an access network device. The access network device includes but is not limited to: a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or unit that completes a part of functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station, may be a micro base station or an indoor base station, or may be a relay node, a donor node, or the like. A specific technology and a specific device form that are used by the access network device are not limited in this application.

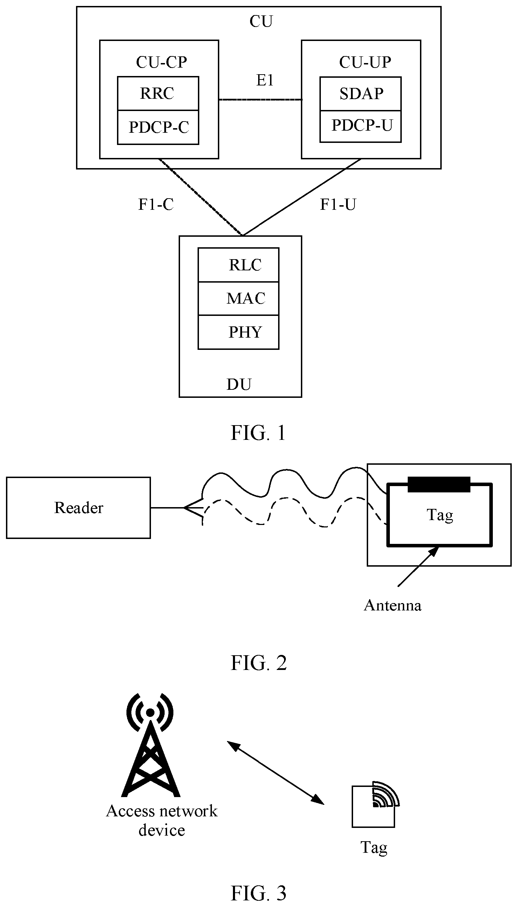

As shown in FIG. 1, in some implementations, the access network device may include a central unit (central unit, CU) and a distributed unit (distributed unit, DU). A RAN device including a CU node and a DU node separates protocol layers of a gNB in an NR system. Functions of some protocol layers are controlled by the CU in a centralized manner. Functions of some or all remaining protocol layers are distributed in the DU, and the CU controls the DU in a centralized manner. Further, the CU may be further divided into a control plane (CU-CP) and a user plane (CU-UP). The CU-CP is responsible for a control plane function, mainly including radio resource control (radio resource control, RRC) and a packet data convergence protocol (packet data convergence protocol, PDCP) corresponding to the control plane (namely, PDCP-C). The PDCP-C is mainly responsible for data encryption/decryption, integrity protection, data transmission, and the like on the control plane. The CU-UP is responsible for a user plane function, mainly including a service data adaptation protocol (service data adaptation protocol, SDAP) and a PDCP corresponding to the user plane (namely, PDCP-U). The SDAP is mainly responsible for processing data of a core network and mapping a flow (flow) to a bearer. The PDCP-U is mainly responsible for encryption and decryption, integrity protection, header compression, sequence number maintenance, data transmission, and the like on the data plane. The CU-CP and the CU-UP are connected through an E1 interface. The CU-CP, on behalf of the gNB, is connected to the core network through an NG interface and connected to the DU through an F1 interface-control plane (namely, F1-C). The CU-UP is connected to the DU through an F1 interface-user plane (namely, F1-U). Certainly, in another possible implementation, the PDCP-C is alternatively in the CU-UP.

It may be understood that, in different systems, the CU (including the CU-CP or the CU-UP) or the DU may alternatively have different names, but a person skilled in the art can understand meanings of the names. For example, in an open radio access network (open radio access network, O-RAN) system, the CU may also be referred to as an open CU (open CU, O-CU), the DU may also be referred to as an open DU (open DU, O-DU), the CU-CP may also be referred to as an O-CU-CP, and the CU-UP may also be referred to as an O-CU-UP. For ease of description, the CU, the CU-CP, the CU-UP, and the DU are used as examples for description in this application. The access network device may further include an active antenna unit (active antenna unit, AAU). The CU implements some functions of the gNB, and the DU implements some functions of the gNB. For example, the CU is responsible for processing a non-real-time protocol and service, to implement functions of an RRC layer. The DU is responsible for processing a physical layer protocol and a real-time service, and implements functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for the control plane function, and the CU-UP is responsible for the user plane function.

The terminal device in embodiments of this application may be a wireless terminal apparatus that can receive scheduling and indication information from the network apparatus. The terminal device may be referred to as a terminal apparatus, and may also be referred to as user equipment (user equipment, UE), a terminal, a mobile station (mobile station, MS), a mobile terminal (mobile terminal, MT), or the like. The terminal apparatus may be a device with a wireless communication function (for providing voice/data connectivity to a user), for example, a handheld device, a vehicle-mounted device, or a vehicle-mounted module having a wireless connection function. Currently, some examples of terminal apparatuses are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a device-to-device (device-to-device, D2D) terminal apparatus, a vehicle to everything (vehicle to everything, V2X) communication terminal apparatus, a smart vehicle, an in-vehicle infotainment system (or referred to as a vehicle-mounted sending unit) (telematics box, T-box), a machine-to-machine/machine-type communication (machine-to-machine/machine-type communication, M2M/MTC) terminal apparatus, an internet of things (internet of things, IoT) terminal apparatus, and the like. For example, the terminal apparatus may be a vehicle-mounted device, an entire vehicle device, a vehicle-mounted module, a vehicle, an on-board unit (on-board unit, OBU), a roadside unit (roadside unit, RSU), a T-box, a chip, a system on chip (system on chip, SoC), or the like. The chip or the SoC may be mounted in a vehicle, an OBU, an RSU, or a T-box. The wireless terminal in industrial control may be a camera, a robot, or the like. The wireless terminal in the smart home may be a television, an air conditioner, a sweeper, a speaker, a set-top box, or the like. The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range-extended electric vehicle (range-extended EV, REEV), a plug-in hybrid electric vehicle (plug-in HEV, PHEV), a new energy vehicle (new energy vehicle), or a roadside apparatus (roadside unit, RSU). The terminal device may alternatively be a device in device-to-device (device-to-device, D2D) communication, for example, an electricity meter or a water meter.

When this application is applied to an AIoT or IoT system, both a reader and a tag device may be implemented based on an infrastructure in a cellular network. In other words, both the reader and the tag may be devices in the cellular network. For example, a function of the reader may be implemented by an access network device like a base station. The tag may be implemented by a terminal device in the cellular network, for example, an internet of things terminal with extremely low power consumption and extremely low complexity. Non-contact data communication may be performed between the access network device and the terminal device, to read information from the terminal device, and/or write information that needs to be stored into the terminal device. It may be understood that, in this application, the access network device may function as the reader, and the terminal device functions as the tag, or the terminal device may be a terminal device in the AIoT or IoT system.

A tag may also be referred to as an electronic tag, an RFID tag, or a tag device. Alternatively, the tag may also be referred to as an AIoT terminal device or an AIoT device. In this application, the tag may also be used as a terminal device.

In a classification manner, tags may be classified into passive tags (passive tag), semi-passive tags (semi-passive tag), and active tags (active tag). The passive tag and the semi-passive tag may use a backscatter (backscatter)-based communication manner, and the active tag uses a communication manner of actively generating a carrier.

In another classification manner, the tags may be classified into the following three types of devices.

Device A (device A): The device A has no energy storage, cannot generate signals independently, and transmits signals in a backscatter manner.

Device B (device B): The device B has energy storage but cannot generate signals independently, and transmits signals in a backscatter manner. The energy stored in the device B can amplify backscattered signals.

Device C (device C): The device C has energy storage, can generate signals independently, and has an active radio frequency element used for transmission.

The tag receives downlink signals by using a low-precision, low-power consumption, medium- or low-frequency ring oscillator or without using a local oscillator. During operation of the tag, energy and a carrier for communication are provided by the reader, and the communication is based on a backscatter carrier.

The reader in embodiments may be a handheld or fixed device for reading or writing tag information, and may also be understood as a device communicating with a tag. The reader may be a terminal device, an access network device, or a device having a read/write function. The reader may also be an IAB node or a relay (relay) node.

For example, as shown in FIG. 2, the reader may send a carrier signal to the tag, and the tag receives the carrier signal through an antenna. A solid line in the figure is the carrier signal sent by the reader, and a dashed line indicates a reflected signal that is reflected and transmitted by the tag based on the carrier signal. The tag can adjust information to be transmitted in the reflected signal. In the foregoing manner, the tag receives downlink signals by using a low-precision, low-power consumption, medium- or low-frequency ring oscillator or without using a local oscillator, so that power consumption of the tag during downlink reception may be further reduced.

The tag is a micro wireless transceiver apparatus, mainly including a built-in tag device antenna, a coupling element, and a chip. The chip of the tag has storage space that can support the reader in reading or writing tag data. After receiving, through the antenna, a radio frequency signal sent by the reader, the tag may implement coupling on the radio frequency signal via the coupling element, so that energy can be provided for the chip of the tag within a coupling channel, and data stored in the chip can be fed back to the reader through the antenna. A communication network that is based on an infrastructure in the cellular network and that includes a reader and a tag may be referred to as a passive (passive) internet of things (internet of things, IoT) network or an ambient internet of things (ambient IoT, A IoT or A-IoT), where the tag device may also be considered as a terminal device, and may be an active tag device, a passive tag device, or a semi-active tag device.

An ambient internet of things system may be used in a passive or semi-passive IoT scenario. For example, in logistics and warehousing scenarios, the tag may be used to inventory and track goods, and perform status monitoring on the goods in a goods transportation process. For another example, in an industrial manufacturing scenario, ambient monitoring and device status monitoring may be performed via the tag.

FIG. 3 is a diagram of a communication system applicable to an embodiment of this application. As shown in FIG. 3, the communication system includes an access network device and a tag (tag). The tag may be an independent device, or the tag may be integrated with a terminal device, that is, the tag is a part of the terminal device. In the communication system, the access network device may function as a reader (reader) in a radio frequency identification (radio frequency identification, RFID) system. The access network device may be used as a reader to communicate with a tag. A communication interface between the access network device and the tag is an Uu interface, that is, air interface communication.

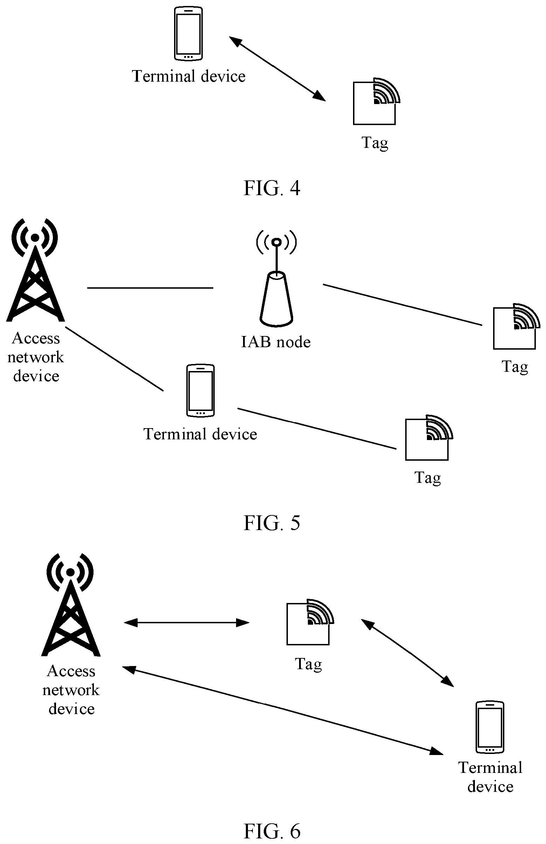

FIG. 4 is a diagram of another communication system applicable to an embodiment of this application. As shown in FIG. 4, the communication system includes a terminal device and a tag. The tag may be an independent device, or the tag may be integrated with the terminal device. In the communication system, the terminal device may function as a reader in an RFID system, that is, the terminal device may serve as a reader to communicate with a tag, and the terminal device may communicate with the tag through a sidelink (sidelink).

FIG. 5 is a diagram of another communication system applicable to an embodiment of this application. As shown in FIG. 5, the communication system includes an access network device, an integrated access and backhaul (integrated access and backhaul, IAB) node, and a tag. The communication system may further include another device, for example, include a device like a terminal device. In the communication system, the access network device may function as a reader in an RFID system, the IAB node may serve as a relay node between the access network device and the tag, the tag transmits information to the IAB node, and the IAB node forwards the information to the access network device through an Uu interface. The tag may be connected to the IAB node through the Uu interface, and the IAB node is connected to a base station through the Uu interface.

In this application, a communication system including the access network device, the terminal device, and the tag may alternatively be a system of a separated architecture. In the communication system, as shown in FIG. 6, the access network device and the terminal device may directly communicate with each other. The access network device may further function as a reader in an RFID system. There is an uplink connection between the tag and the access network device, and there is a downlink connection between the tag and the terminal device. The terminal device may transmit information to the tag, and then the tag forwards the information to the access network device. Alternatively, there is a downlink connection between the tag and the access network device, and there is an uplink connection between the tag and the terminal device. The access network device may transmit information to the tag, and then the tag forwards the information to the terminal device. Energy required by the tag to send the information may be provided by an energy signal, and the energy signal may be from the access network device, or may be from the terminal device or another device. The energy signal may also be referred to as an excitation signal.

In the system of the separated architecture, in an implementation, the terminal device may send data to the tag. The terminal device or the access network device provides a carrier signal. The tag generates or sends an uplink signal based on the carrier signal, and sends the uplink signal to the access network device. The uplink signal may include data sent by the tag to the access network device. The data may be data of the tag, or may be data received from the terminal device. In another implementation, the access network device may send data to the tag. The terminal device or the access network device provides a carrier signal. The tag generates a downlink signal based on the carrier signal, and sends the downlink signal to the terminal device. The downlink signal may include data sent by the tag to the terminal device. The data may be data of the tag, or may be data received from the access network device.

There is still another direct connection architecture. In the direct connection architecture, a tag and an access network device may directly transmit data. When the tag sends an uplink signal to the access network device, a carrier signal used to generate the uplink signal is provided by the terminal device.

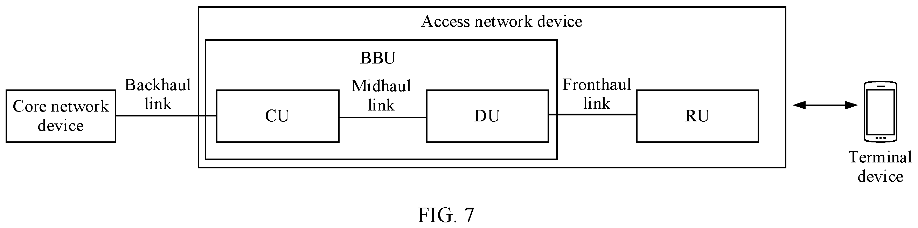

This application is further applicable to an ORAN architecture. As shown in FIG. 7, an ORAN system may include an access network device, a terminal device, and a core network device. The ORAN system may include components other than the components shown in the figure.

As shown in the figure, the access network device (for example, an eNB, a gNB, or a next-generation access network device) communicates with a core network (Core Network, CN) device through a backhaul (Backhaul) link, and communicates with user equipment (User Equipment, UE) through an air interface.

For example, a baseband unit (Baseband Unit, BBU) in the access network device may communicate with a core network (Core Network) through a backhaul (Backhaul) link, and a radio frequency unit (Radio Unit, RU) in the access network device may communicate with at least one UE through an air interface. The BBU communicates with at least one RU through a fronthaul link. The BBU and the RU may be co-located, or may not be co-located. The BBU includes at least one of at least one control unit (Control Unit, CU) and at least one distributed unit (Distributed Unit, DU), and the CU and the DU may communicate with each other through at least one midhaul (Midhaul) link. In the ORAN system, the CU may also be referred to as an open CU (open CU, O-CU), and the DU may also be referred to as an open DU (open DU, O-DU).

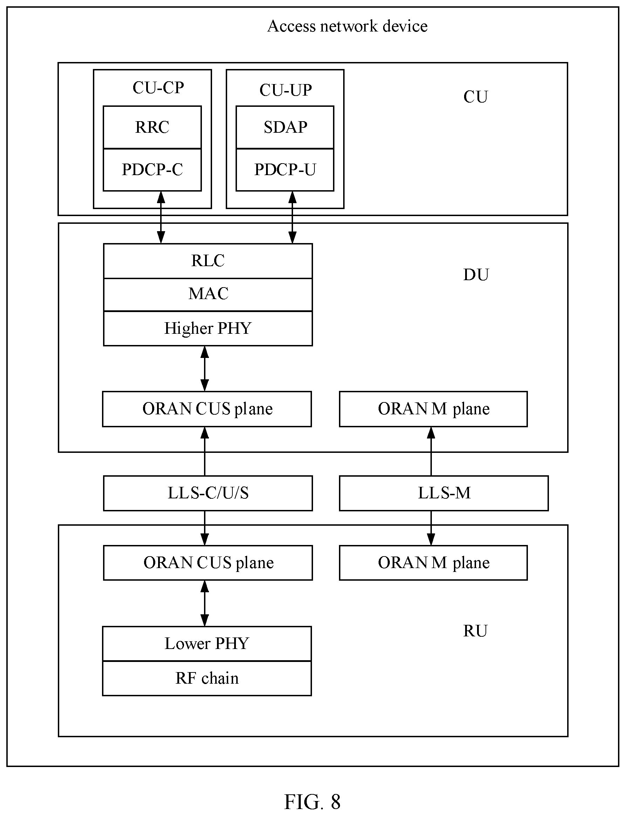

FIG. 8 is a diagram of network element function division and a protocol layer structure of an ORAN device. In some examples, a CU is a logical node that carries a radio resource control (Radio Resource Control, RRC) layer, a service data adaptation protocol (Service Data Adaptation Protocol, SDAP) layer, a packet data convergence protocol (Packet Data Convergence Protocol, PDCP) layer, and another control function of an access network device. The CU is connected to a network node like a core network through some interfaces, and these interfaces may be interfaces such as an E2 interface. Optionally, the CU may have a part of functions of the core network. The CU (for example, the PDCP layer and a higher layer) is connected to a DU (for example, an RLC layer and a lower layer) through some interfaces, and these interfaces may be interfaces such as an F1 interface. In some examples, these interfaces (such as the F1 interface) may provide control plane (control plane, C-Plane) and user plane (user plane, U-Plane) functions (such as interface management, system information management, UE context management, and RRC message transmission). An F1AP is an application protocol of the F1 interface, and in some examples, an F1 signaling procedure is defined. The F1 interface supports a control plane F1-C and a user plane F1-U.

In some examples, the CU may be split into a CU-CP (Control Unit-Control Plane) and a CU-UP (Control Unit-User Plane). The CU-CP is a logical node that carries an RRC layer and an PDCP-C (Control plane part of PDCP) layer, and is configured to implement a control plane function of the CU. The CU-CP may interact with a network element configured to implement a control plane function in the core network. The network element configured to implement the control plane function in the core network may be an access and mobility function network element, for example, an access and mobility management function (access and mobility management function, AMF) in a 5G system. The AMF network element is configured to be responsible for mobility management in a mobile network, for example, location update of a terminal device, network registration of the terminal device, and handover of the terminal device. The CU-UP is a logical node that carries an SDAP layer and an PDCP-U (User plane part of PDCP) layer, and is configured to implement a user plane function of the CU. The CU-UP may interact with a network element configured to implement a user plane function in the core network. The network element configured to implement the user plane function in the core network, for example, a UPF (user plane function) in the 5G system, is configured to be responsible for forwarding and receiving data in the terminal device. The foregoing configurations of the CU and the DU are merely examples. Alternatively, functions of the CU and the DU may be configured based on a requirement. For example, the CU or the DU may be configured to have functions of more protocol layers, or the CU or the DU may be configured to have some processing functions of a protocol layer. For example, a part of functions of the RLC layer and a function of a protocol layer above the RLC layer are set on the CU, and remaining functions of the RLC layer and a function of a protocol layer below the RLC layer are set on the DU. For another example, the functions of the CU or the DU may be divided based on service types or other system requirements. For example, division may be performed based on latencies. Functions whose processing time needs to satisfy a low-latency requirement are set on the DU, and functions whose processing time does not need to satisfy the latency requirement are set on the CU.

In some examples, the DU is a logical node that carries a radio link control (Radio Link Control, RLC) layer, a media access control (Medium Access Control, MAC) layer, a higher physical (Higher Physical, Higher PHY) layer, and other functions. In some examples, the DU may control at least one RU. The DU is connected to the RU through some interfaces, and these interfaces may be fronthaul interfaces.

In some examples, the CU may have no PDCP layer, that is, include only an RRC layer. The CU-CP have no PDCP-C. The CU-UP may have no PDCP-U, or may have no CU-UP. In some examples, the DU may have no RLC layer, and have only a MAC layer and a higher PHY layer. In addition, in some examples, there may be no CU, and only the DU is included.

In some examples, the higher PHY layer includes a part of PHY layer processing, for example, processing functions such as forward error correction (forward error correction, FEC) encoding and decoding, scrambling, modulation, and demodulation. In some examples, the RU is a logical node that carries lower physical layer (Lower Physical Layer, Lower PHY) and radio frequency (Radio Frequency, RF) chain (chain) processing. In some examples, the RU may be a 3rd generation partnership project (the 3rd generation partnership project, 3GPP) transmission reception point (Transmission Reception Point, TRP), a remote radio head (Remote Radio Head, RRH), or another entity with similar functionality. In some examples, the low-PHY includes a part of PHY processing, processing functions such as fast Fourier transform (fast Fourier transform, FFT), inverse fast Fourier transform (inverse fast Fourier transformation, IFFT), digital beamforming, and filtering. The RU communicates with one or more UEs through a radio link.

The DU and the RU may be co-located, or may not be co-located. The DU and the RU exchange control plane information and user plane information through a lower-layer split control user synchronous-plane (Lower-Layer Split Control User Synchronous-Plane, LLS-CUS) plane (plane) interface with a fronthaul link. The LLS-CUS may include an LLS-C interface and an LLS-U interface that respectively provide a control plane (control-Plane, C-Plane) and a user plane (user-Plane, U-Plane). In some examples, the control plane (C-Plane) is real-time control between the DU and the RU. The DU and RU exchange management information through an LLS-M interface with a fronthaul link. The management plane (management-Plane, M-Plane) refers to non-real-time management operation between the DU and RU. The DU and the RU may cooperate to jointly implement functions of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher layer function of the PHY layer, and the RU is configured to: implement a lower layer function of the PHY layer, or implement the lower layer function and a radio frequency function. The higher layer function of the physical layer may include some functions of the physical layer, and some functions are closer to the MAC layer. The lower layer function of the physical layer may include some other functions of the physical layer, and some other functions are closer to an intermediate radio frequency side.

In an ambient internet of things system, one or more of the following services can be performed between a tag and a reader: inventory, positioning, sensing, and command (command). It may be understood that the command service may include at least one of a read (read) service, a write (write) service, or a lock (lock) service.

Inventory service: The inventory service may also be referred to as a counting operation, and the service can obtain identification information of the tag. For example, the reader may obtain the identification information of the tag by using a command like a query (query) command or an acknowledgment (acknowledgement, ACK) command. To facilitate counting of the tag, the tag includes four types of session (session) identifiers S0 to S3 in total, and each type of session identifier corresponds to two types of inventory states: A and B. The inventory state is indicated by an inventoried flag bit (sessInventoried flag). When a tag is selected by the reader, a select (select) command sent to the tag carries a session identifier, and the tag stores the session identifier. When the reader performs the inventory service on the tag, the query command sent to the tag includes the session identifier. In this case, the tag may toggle an inventory state corresponding to the session identifier from A to B. If the reader sends the query command again to perform the inventory service, because the inventory state in the tag is B, the tag does not respond to the reader, preventing the same tag from being inventoried a plurality of times in one inventory round.

Read (read) service: The read service may be performed to read an electronic product code (electronic product code, EPC) in a storage area of the tag, a tag identifier (tag identifier, TID), content stored in a reserved area of the tag, content stored in a user storage area, or the like.

Write (write) service: The write service may perform a write operation on the storage area of the tag.

Kill (kill) service: The kill service can make the tag permanently incapable of operating.

Lock (lock) service: The lock service may lock information about the tag, to prevent a read service or a write service on the tag. Alternatively, the lock service may lock the storage area, to prevent or allow a read service or a write service on the storage area.

The foregoing services are merely examples. Other services or operations may be further performed by the tag and the reader, and are not enumerated herein.

Embodiments of this application further relate to positioning. First, a 5G positioning technology is described.

In the 5G positioning technology, some parameters of a radio signal are measured, and a location of a terminal is determined based on a specific positioning technology. The measurement parameters generally include transmission time, signal strength, an angle of arrival, an angle of departure, and the like of a radio wave.

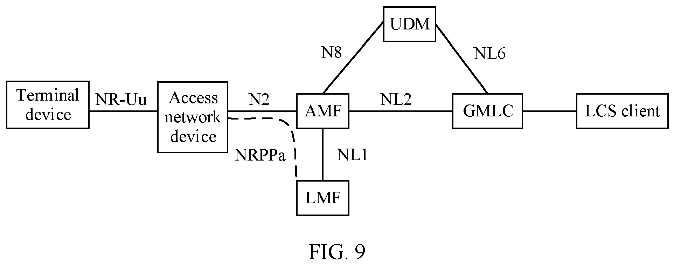

FIG. 9 is a diagram of a structure of a positioning system according to an embodiment of this application. The positioning system includes a terminal device, an access network device, an AMF, an LMF, a unified data management (unified data management, UDM) network element, a gateway mobile location center (gateway mobile location center, GMLC), and a location service client (location service client, LCS Client) network element.

In the 5G positioning technology, functions of the network elements are as follows.

The access network device receives or sends, as required by the LMF, a positioning message related to a new radio positioning protocol A (NR positioning protocol A, NRPPa), completes positioning-related measurement, and reports a measurement quantity to the LMF, for example, reports synchronization signal-reference signal received power (synchronization signal-reference signal received power, SS-RSRP) and synchronization signal-reference signal received quality (synchronization signal-reference signal received quality, SS-RSRQ) of a serving cell and a neighboring cell.

The AMF supports receiving and managing a positioning request (initiated by UE, the GMLC, or the AMF), supports LMF selection, supports NRPPa-based positioning-related interaction with the base station, and transparently transmits positioning-related messages between the LMF, the access network device, the terminal device, and another entity.

The LMF receives and processes a positioning request or a positioning-related data request from the AMF, and sends the positioning result or related positioning data to the AMF, where a selected positioning method can be a single positioning method or a hybrid positioning method, and related positioning measurement is controlled based on different positioning methods; and calculates positioning assistance data and delivers the data to the terminal device.

The UDM stores positioning subscription information and route information of subscribers.

The GMLC obtains subscriber latitude and longitude information and returns the information to the LCS client after receiving a terminal device positioning request from the LCS client; and serves as an operation platform of a positioning service system to manage subscriber data, service data, service subscription information, and service provider (service provider, SP) data, provide authentication for charging and value-added service applications, and the like.

The LCS client (Client) is a logical functional entity, and may be an entity inside a public land mobile network (public land mobile network, PLMN), for example, an O&M tool, or may be an entity outside a PLMN, for example, a third-party positioning server not deployed by an operator. The LCS client initiates a positioning request carrying parameters such as quality of service (quality of service, QoS), to request to obtain location information of one or more terminal devices.

The 5G positioning system involves the following positioning protocols.

The NRPPa is a positioning protocol used between the base station and the LMF. The base station and the LMF exchange positioning information based on the NRPPa positioning protocol.

The LPP directly uses the LTE positioning protocol, and is a positioning protocol terminated between the terminal device and the LMF. The LMF and the terminal device exchange positioning information based on the LPP positioning protocol. The LMF interacts with the terminal device through a non-access stratum (non-access stratum, NAS) message, and the interacted message is transparent to the base station.

A positioning service request may be initiated by different network element modules, for example, initiated by the terminal device or the AMF, or may be indirectly initiated by the GMLC (for example, processing of a location service request initiated by the LCS client). A specific positioning procedure is not described in detail in this application.

The related positioning technology may be positioning based on an uplink angle of arrival (uplink angle of arrival, UL-AoA), or may be positioning by using another technology. This is not limited in this application. The UL-AoA is an angle-based positioning method. In angle-based positioning, a clock synchronization problem between base stations and between a base station and a terminal device also does not need to be considered. Specifically, the base station calculates location information of the terminal device by measuring an angle of arrival of an uplink signal of the terminal device. UL-AoA positioning does not depend on synchronization precision between base stations. More antenna arrays indicate more accurate angle measurement and higher positioning precision.

The foregoing describes the RFID technology and the 5G positioning technology. However, a low-capability terminal does not support a complex design, and signaling interaction cannot be designed too complex. For example, a tag can perform an inventory service only in an inventory procedure, and cannot support a complex positioning procedure. If the access network device reports location information of the tag, because one access network device may perform services with a plurality of tags and there are a large quantity of tags, overhead for the access network device to report location information of each tag is large. Therefore, this application provides a method, to reduce overhead for reporting location information of a tag. Details are described below.

When the method provided in this application is applied to the network architectures in FIG. 2 to FIG. 9, the method performed on the access network device side may also be performed by a module (for example, a chip) in the access network device in FIG. 2 to FIG. 9, or may be performed by a control subsystem including a function of the access network device. The control subsystem including the function of the access network device may be a control center in the foregoing application scenarios such as a smart grid, industrial control, smart transportation, and a smart city. The method performed on the terminal device side may also be performed by the tag, the terminal device, or a module (for example, a chip or a modem) in the terminal device in FIG. 2 to FIG. 9, or may be performed by an apparatus including a function of the terminal device.

It may be understood that a specific structure of an execution entity of the method provided in embodiments of this application is not particularly limited in this application, and may be used in a module in the terminal device or the access network device, provided that a program that records code of the method provided in embodiments of this application can be run to perform communication according to the method provided in embodiments of this application. The following uses interaction between the terminal device and the access network device as an example for description.

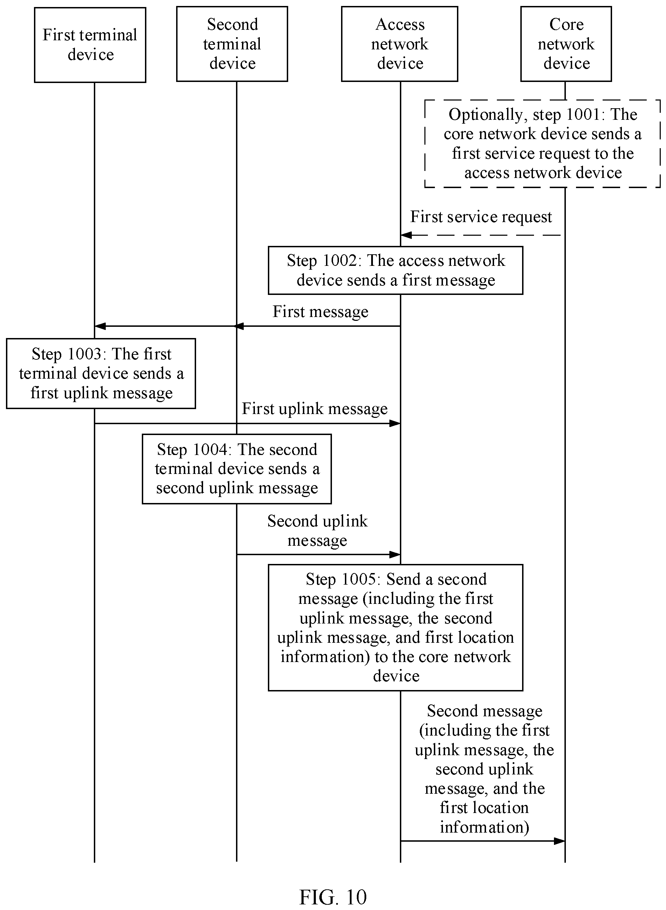

FIG. 10 is a schematic flowchart of a communication method according to an embodiment of this application. The method includes the following steps.

Optionally, step 1001: A core network device sends a first service request to an access network device.

Correspondingly, the access network device receives the first service request.

For example, the first service request is used to request to perform a first service, where the first service includes one or more of the following: a paging service, a positioning service, a location reporting service, an inventory service, a sensing service, a command service, a read service, a write service, and a kill service.

In an implementation, the core network device may further send first information, where the first information indicates to report location information of a terminal device. It may be understood that the first information indicates to report the location information of the terminal device, and an area range of the location information of the terminal device as indicated to be reported by the first information, is smaller than a cell-level area range, for example, indicates an area or a location of the terminal device in a cell. The "cell" herein is a cell in which the terminal device is located, and the cell belongs to the access network device. Optionally, the first information may indicate to report a TRP corresponding to the location of the terminal device in the cell or area information of the TRP. The TRP may alternatively be replaced with a pico radio unit (Pico Radio Unit, PRU), a pico remote radio unit (Pico Remote Radio Unit, pRRU), an RRU, a BBU, an RRU hub, a head end, an antenna, or a relay device.

In an implementation, the core network device may further send second information, where the second information indicates to measure a message or a signal of the terminal device. Optionally, the second information further indicates a measurement quantity. For example, the measurement quantity may include at least one of an angle, signal strength, and time of arrival.

In this application, the first service request, the first information, and the second information may be separately sent; or the core network device may include at least one of the first information and the second information in the first service request, that is, the first service request includes at least one of the first information and the second information; or the core network device may include the first service request in the first information or the second information, that is, the first information or the second information includes the first service request. How the core network device specifically sends the first service request, the first information, and the second information is not limited in this application.

Optionally, before sending the first service request, the core network device may receive at least one of a second service request and the first information from a server. The server may be an external server, for example, an internet of things server, a user server, or a factory server. The second service request may be at least one service of inventory, sensing, a downlink command (like a read/write/lock/kill command), and a positioning service request. The second service request may be used to trigger a service procedure of an A-IoT. The core network device may directly forward the second service request to the access network device. In this case, the first service request and the second service request are a same service request. For example, the first service request generated by the core network device is an N2 message, and the N2 message includes the second service request. Alternatively, the core network device may send the first service request based on the second service request.

In this application, the core network device may be a network element like a tag management function (tag management function, TMF) network element or an AMF, or an ambient internet of things management function (ambient IoT management function, AIoTMF) network element, or may be another network element. This is not limited in this application. If the core network device is a TMF network element, it may be understood that the TMF network element implements (a part of) functions of the AMF network element. After receiving the second service request, the TMF network element may send the second service request to the AMF network element. If the core network device is an AMF network element, the AMF network element may directly receive the second service request from the server.

Step 1002: The access network device sends a first message, where the first message is used to select or page at least one terminal device.

The terminal device is a passive device, a semi-passive device, or an active device; or the terminal device is an ambient internet of things terminal device, for example, the terminal device is a tag.

In this application, the first message may be used to page or select at least one terminal device, or trigger the at least one terminal device to send an uplink message or initiate access to a network. For example, the first message may be a paging message, a selection message, or a downlink trigger message, or may be a message of another type. The first message may include mask (mask) information or identification information. For example, the identification information may include one or more of terminal identification information, service identification information, group identification information, a public land mobile network (public land mobile network, PLMN), an operator identifier, production identification information, vendor identification information, application (for example, a commodity or an article category) identification information, and user-defined identification information. For a terminal device, if mask information in the terminal device matches the mask information in the first message, the terminal device is a terminal device selected or paged by the first message; or if identification information in the terminal device matches the identification information in the first message, the terminal device is a terminal device selected or paged by the first message.

The first message may further include at least one of session (session) information and action (action) information. The session information indicates a session, and the action information indicates that a session flag bit of the session is set to a specified value, for example, the specified value is A or B. For example, it is assumed that the session indicated by the session information is S0, and the action information is 0. For a terminal device, if mask information in the terminal device matches the mask information in the first message, the terminal device sets a flag bit of the session S0 to A.

In this application, the access network device may send the first message via a relay device. The relay device may be a terminal device, or may be another device like an IAB node. For example, FIG. 5 is used as an example. The terminal device is a tag, and the relay device is an IAB node. After the access network device sends the first message, the IAB node receives the first message, and forwards the first message to the tag.

In this application, an example in which a first terminal device and a second terminal device are selected or paged by the first message is used. A quantity of terminal devices that are actually selected or paged may be greater than 2. Other cases are not described again.

Step 1003: The first terminal device sends a first uplink message.

Step 1004: The second terminal device sends a second uplink message.

Correspondingly, the access network device receives the first uplink message from the first terminal device, and receives the second uplink message from the second terminal device.

Before the first terminal device sends the first uplink message and before the second terminal device sends the second uplink message, a connection to the access network device may be first set up in a random access process. A specific process is not described again.

In this application, the terminal device may send the uplink message to the access network device via a relay device. For example, FIG. 5 is used as an example. The first terminal device is a tag, and the relay device is an IAB node. After the first terminal device sends the first uplink message, the IAB node receives the first uplink message, and forwards the first uplink message to the access network device.

The first uplink message may include first data of the first terminal device, and the first data may include at least one piece of data of an electronic product code (electronic product code, EPC) of the first terminal device, a tag identifier (tag identifier, TID) of the first terminal device, sensor data collected by the first terminal device, or storage area data of the first terminal device. This is not limited in this application. Similarly, the second uplink message may include second data of the second terminal device.

Each terminal device may send a plurality of uplink messages. Herein, an example in which one terminal device sends one uplink message is used for description. A quantity of uplink messages sent by each terminal device is not limited in this application. After receiving an uplink message from one terminal device, the access network device may further send a downlink message to the terminal device. A specific process is not limited in this application.

The first uplink message and the second uplink message may be NAS messages. For example, the first uplink message is a NAS message in an uplink NAS transport (UL NAS TRANSPORT) format. An uplink message structure is not limited. Details are not described herein again.

The first uplink message and the second uplink message may be messages related to a service requested by the first service request. For example, the first uplink message and the second uplink message each include service data requested by the first service request.

Step 1005: The access network device sends a second message to the core network device, where the second message includes the first uplink message, the second uplink message, and first location information, and the first location information indicates a location of the first terminal device and the second terminal device.

Correspondingly, the core network device receives the second message from the access network device.

In this application, the core network device may be an AMF network element, a TMF network element, an LMF network element, an ambient internet of things management function network element, an internet of things server, or the like. This is not limited in this application.

In an implementation, the access network device may use, as the first location information, identification information of a TRP that receives the first uplink message and the second uplink message. A cell of the access network device may include a plurality of TRPs, each TRP corresponds to one area, and an area corresponding to each TRP is less than a range of the cell. When the access network device receives the first uplink message and the second uplink message via one TRP, it indicates that the first terminal device and the second terminal device are located in an area corresponding to the TRP. Therefore, the identification information of the TRP may be used as location information of the first terminal device and the second terminal device.

In this implementation, the TRP may alternatively be replaced with a pico radio unit (Pico Radio Unit, PRU), a pico remote radio unit (Pico Remote Radio Unit, pRRU), an RRU, a BBU, an RRU hub, a head end, an antenna, or a relay device. The pico radio unit may also be referred to as a micro radio frequency unit or the like. This is not limited in this application. The relay device may be configured to forward the first uplink message and the second uplink message, that is, forward the first uplink message and the second uplink message to the access network device. The relay device may be a terminal device, or may be another type of device having a wireless transceiver function. This is not limited in this application.

In combination with the foregoing description, the first location information may include at least one of the following:
the identification information of the TRP; identification information of the PRU; identification information of the RRU; identification information of the BBU; identification information of the RRU hub; identification information of the head end; identification information of the antenna; identification information of the relay device; identification information of the cell; identification information of a reader; identification information of an A-IoT reader; an NR CGI; sector information of an active antenna processing unit (active antenna unit, AAU); information about a tracking area (tracking area); identification information of an AIoTMF; identification information of the TMF; a beam angle; distance information; and a coverage level.

The NR CGI is an identifier of a cell in which the terminal device is located.

In another implementation, the first location information may be information about areas in which the first terminal device and the second terminal device are located. For example, the first location information is an area identifier, and one area identifier corresponds to one area in the cell.

For example, the first location information may include at least one of the following:
area information of the TRP; area information of the PRU; area information of the RRU; area information of the BBU; area information of the RRU hub; area information of the head end; area information of the antenna; area information of the relay device; area information of the cell; area information of a reader; and area information of an A-IoT reader. An area corresponding to the area information of the TRP, the PRU, the RRU, the BBU, the RRU hub, the head end, the antenna, the relay device, the cell, the reader, or the A-IoT reader is a part of the cell.

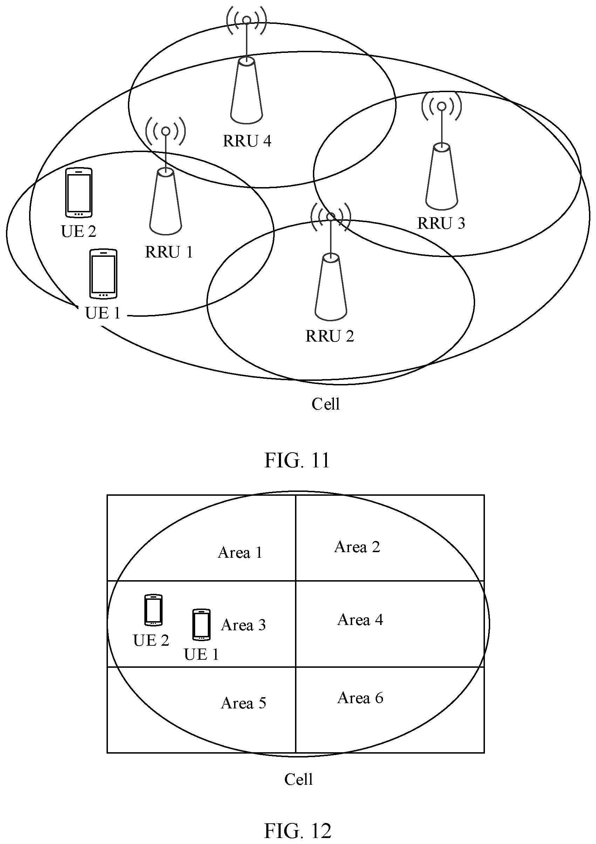

For example, as shown in FIG. 11, a cell of the access network device includes four RRUs, which are respectively an RRU 1 to an RRU 4, and an area corresponding to each RRU is a part of the cell. An area of the RRU 1 includes UE 1 and UE 2. If the access network device receives uplink messages of the UE 1 and the UE 2 via the RRU 1, location information of the UE 1 and the UE 2 that is reported by the access network device to the core network device may include an NR CGI, and identification information of the RRU 1 or area information of the RRU 1. Alternatively, location information reported by the access network device to the core network device may include only identification information of the RRU 1 or area information of the RRU 1.

For another example, a cell of the access network device may be divided into a plurality of areas, each area corresponds to one piece of identification information, and the first location information may be identification information of an area in which the terminal device is located. Specifically, how to divide a cell and a quantity of areas divided in each cell is not limited in this application. For example, as shown in FIG. 12, a cell of the access network device is divided into six areas: an area 1 to an area 6. An area 3 includes UE 1 and UE 2. If the access network device receives uplink messages of the UE 1 and the UE 2, location information of the UE 1 and the UE 2 that is reported by the access network device to the core network device includes an NR CGI, and identification information of the area 3 or area information of the area 3. Alternatively, location information reported by the access network device to the core network device may include only identification information of the area 3 or area information of the area 3.

In another implementation, the first uplink message may also carry the location information of the first terminal device. In this case, the first terminal device may obtain the location information in advance. The first terminal device may obtain the location information through the first message, or obtain the location information through a query (Query) message, a query repetition (QueryRep) message, a scheduling message, a MAC control element (control element, CE), a contention resolution identifier, or a downlink message of other downlink data. A specific process is not limited. The location information obtained by the first terminal device may be a cell identifier, or may be the identification information of the TRP, the PRU, the RRU, the BBU, the RRU hub, the head end, the antenna, or the relay device, or may be the area information corresponding to the TRP, the PRU, the RRU, the BBU, the RRU hub, the head end, the antenna, or the relay device.

Similarly, the second uplink message may also carry the location information of the second terminal device, and specific content is not described again. Because the first terminal device and the second terminal device are located in a same area, the location information in the first uplink message may be the same as the location information in the second uplink message.

In this application, after receiving a plurality of uplink messages, the access network device may encapsulate the plurality of uplink messages and same location information associated with the plurality of uplink messages into one message, for example, the second message, and send the message to the core network device. The foregoing is merely an example. A quantity of uplink messages carried by the access network device in the second message is not limited, and another uplink message may also be carried. Examples are not described herein one by one.

Optionally, the second message may further include information like receiving time information of each uplink message. Alternatively, the second message may further include receiving time information of at least one uplink message.

Because all these messages are received via one TRP, one head end, or the like, the messages may be associated with same location information. In this way, overhead for reporting location information can be reduced, and resource utilization can be improved.

In another implementation, each time after receiving one uplink message, the access network device may send, to the core network device, one message that includes the one uplink message and one piece of location information. For example, the access network device generates the second message based on the first uplink message and the first location information. In this case, the second message includes only one uplink message, that is, the first uplink message. The access network device generates a third message based on the second uplink message and the first location information. In this case, the third message includes only one uplink message, that is, the second uplink message.

In another implementation, the access network device may alternatively separately report the uplink message and the location information of the terminal device. For example, the access network device separately sends the second message and the first location information to the core network device, where the second message includes the first uplink message and/or the second uplink message, and the second message and the first location information are separately sent. If the access network device receives uplink messages of a plurality of terminal devices, the access network device may send one piece of location information. The location information is associated with the uplink messages of the plurality of terminal devices, or the location information is common location information of the plurality of terminal devices. For example, the location information may be a UE temporary identity (for example, a 5G-serving-temporary mobile subscriber identity (serving-temporary mobile subscriber identity, s-TMSI) or a temporary mobile group identity (temporary mobile group identity, TMGI)) or an AMF UE NGAP identity. The NGAP is a next generation application protocol (next generation application protocol). The AMF/TMF or another core network device may associate or match received location information with a corresponding uplink message. The location information may also be the first location information described above. Alternatively, if the access network device receives uplink messages of a plurality of terminal devices, the access network device reports the uplink messages of the plurality of terminal devices to the core network device (before, after, or at the same time), and the access network device may send location information of the plurality of terminal devices to the core network device, that is, the first location information described above.

In this application, if the uplink message sent by the terminal device is not a NAS message, the access network device may also parse the uplink message to obtain message content in the uplink message, to re-encapsulate the message content and the location information into a new message, and send the new message to the core network device.

Optionally, the core network device may send the first location information to the server. For example, after receiving the second message, the core network device obtains the first uplink message, the second uplink message, and the first location information in the second message, and the core network device may send the first uplink data in the first uplink message, the second uplink data in the second uplink message, and the first location information to the server.

In this application, the access network device may further measure an uplink message or a signal of each terminal device, to obtain a measurement result, and send the measurement result to the access network device, so that the core network device may determine the location information of the terminal device based on the measurement result. The following provides several possible implementations.

Implementation 1: The access network device measures an uplink message of each terminal device, to obtain a measurement result. The access network device may send the measurement result of each terminal device to the core network device. The measurement result may be used to determine location information of the terminal device, and precision of the location information determined based on the measurement result is higher than precision of the first location information. For example, the location information determined based on the measurement result may be longitude and latitude coordinates, meter-level location information, or the like.

For example, the first terminal device is used as an example. The access network device may measure the first uplink message, to obtain a first measurement result. The first measurement result is used to determine second location information of the first terminal device, and precision of the second location information is higher than precision of the first location information. The first measurement result may include at least one of an uplink angle of arrival AoA, signal strength, time of arrival, and distance information of the first uplink message, and the first measurement result may further include other information. This is not limited in this application.

The access network device sends the first measurement result to the core network device, for example, may send the first measurement result through the second message. The core network device may determine the second location information of the first terminal device based on the first measurement result. The core network device may further send the second location information to the server.

How the core network device determines the second location information based on the first measurement result is not limited in this application. For example, the core network device may calculate the first measurement result according to a positioning algorithm, to obtain the second location information of the first terminal device. For another example, the access network device sends the first measurement result to a positioning management function (location management function, LMF) network element, and the LMF network element calculates the first measurement result according to a positioning algorithm, to obtain the second location information, and sends the second location information to the core network device. The positioning algorithm may be a UL-AoA positioning algorithm, or may be another positioning algorithm. This is not limited in this application.

The access network device may further measure an uplink message of another terminal device, to obtain a measurement result. For a specific process, refer to the foregoing descriptions. Details are not described herein again.

Implementation 2: The access network device sends positioning configuration information, where the positioning configuration information is used to transmit a positioning signal. For example, the positioning configuration information includes at least one of the following:
a transmission periodicity of the positioning signal, a transmission count of the positioning signal, a positioning signal type, a transmission time period of the positioning signal, a transmission time offset of the positioning signal, a frequency of the positioning signal, and an absolute transmission time of the positioning signal.

Alternatively, the positioning configuration information may be sent by the core network device to the access network device, and then forwarded by the access network device. The positioning signal is not limited to a positioning sequence, an EPC, uplink data, a random access request, or a user identifier, and may be any control signal or data sent by the terminal device in uplink.

The terminal device selected or paged by the access network device may send the positioning signal based on the positioning configuration information. The access network device may measure a positioning signal of each terminal device, to obtain a measurement result. The access network device may send the measurement result of each terminal device to the core network device. The measurement result may be used to determine location information of the terminal device, and precision of the location information determined based on the measurement result is higher than precision of the first location information. For example, the location information determined based on the measurement result may be longitude and latitude coordinates, meter-level location information, or the like.

For example, the first terminal device is used as an example. The first terminal device sends at least one positioning signal based on the positioning configuration information. The access network device measures the at least one positioning signal, to obtain a second measurement result. The access network device sends the second measurement result to the core network device, for example, may send the second measurement result through the second message. The core network device may determine third location information of the first terminal device based on the second measurement result. The core network device may further send the third location information to the server.

As described above, the first service requested by the first service request in this application may be at least one of the paging service, the positioning service, the location reporting service, the inventory service, the sensing service, the command service, the read service, the write service, and the kill service. The following describes the foregoing process with reference to an inventory service procedure.

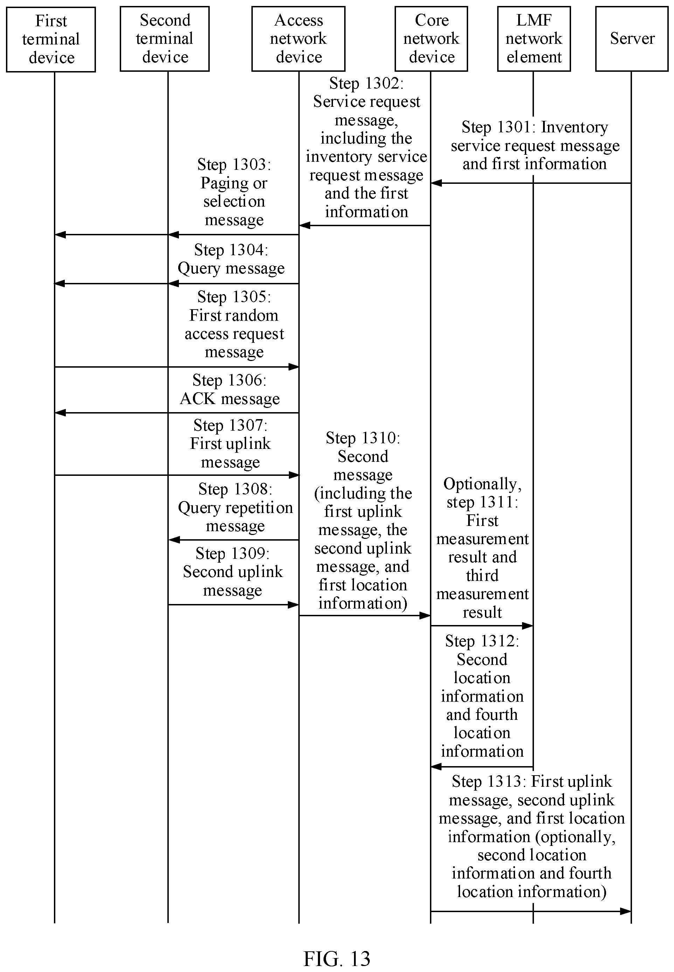

FIG. 13 is a diagram of an inventory procedure. Names of messages in the following procedure are merely examples, and there may be other message names. Details are not described herein again.

Optionally, step 1301: A server sends an inventory service request message and first information to a core network device.

The inventory service request message indicates to perform an inventory service on a terminal device.

The inventory service request message and the first information may be separately sent, or the inventory service request message may include the first information. This is not limited in this application.

Step 1302: The core network device sends a service request message to an access network device, where the service request message includes the inventory service request message and the first information.

A type of the service request message is not limited. For example, in an NR system, the service request message may be an N2 message.

Step 1303: The access network device sends a paging or selection message, to select or page at least one terminal device.

The paging or selection message includes mask (mask) information. If mask information included in a terminal device matches the mask information included in the paging or selection message, it indicates that the terminal device is selected or paged.

The paging or selection message may further include session information and/or action information. For details, refer to the foregoing descriptions. Details are not described herein again.

Step 1304: The access network device sends a query (Query) message, where the query message is used to initialize an inventory cycle.

In an implementation, the query message includes a value of a parameter Q, and the parameter Q is used to determine a total quantity 2^{Q} of slots included in an inventory cycle indicated by a reader. For example, if Q=4, the total quantity of slots included in the inventory cycle is 2⁴=16.

For each selected or paged terminal device, an index range of a slot allocated by the access network device may be calculated based on the value of Q as [0, 2^{Q}-1]. The terminal device generates a random number in [0, 2^{Q}-1] based on the value of Q, and the terminal device uses the random number as an initial value of a counter. For example, if Q=4, the random number generated by the terminal device is one in [0, 15]. For example, if the random number generated by the terminal device is 10, the initial value of the counter is 10.

Each time the terminal device receives one query repetition (QueryRep) message, the value of the counter is decreased by one. When the value of the counter is equal to 0, the terminal device may send a 16-bit random number (random number 16, RN 16). The RN 16 may be used to trigger a random access procedure, and may be used as a random access request message. A 1^{st} slot after the query message is a slot 0. If the random number generated by the terminal device is 0, the terminal device may send the RN 16 immediately after receiving the query message.

It is assumed that a first terminal device is selected or paged, and a counter obtained after the first terminal device receives the query message is 0. In this case, the first terminal device may perform step 1305.

Step 1305: The first terminal device sends a first random access request message.

For example, the first random access request message may be an RN 16 generated by the first terminal device. Herein, the RN 16 is used as an example. The terminal device may alternatively send a random number of another length, for example, an 8-bit random number.

Step 1306: If successfully receiving the RN 16, the access network device feeds back an acknowledgment (acknowledgement, ACK) message, where the ACK message includes the RN 16 from the first terminal device.

The ACK message may also be referred to as a random access response message or a conflict resolution message.

If the first terminal device receives the ACK message including the RN 16 of the first terminal device, step 1307 is performed.

Step 1307: The first terminal device sends a first uplink message.

The first uplink message includes service data related to the inventory service, for example, the first uplink message may include at least one piece of data of an EPC of the first terminal device, a TID of the first terminal device, sensor data collected by the first terminal device, and storage area data of the first terminal device. This is not limited in this application.

The first terminal device may send a plurality of uplink messages. In this application, one uplink message is used as an example for description, and a quantity of uplink messages sent by the first terminal device is not limited.

Optionally, if the paging or selection message further includes session information, the first terminal device may further toggle a flag bit corresponding to a session indicated by the session information, for example, toggle from a state A to a state B.

After data transmission of the inventory service is completed between the access network device and the first terminal device, the access network device may send a query repetition message to trigger a next slot.

Step 1308: The access network device sends the query repetition message.

It is assumed that a second terminal device is selected or paged, and a counter obtained after the second terminal device receives the query repetition message is 0. In this case, the second terminal device may perform a random access process. A specific procedure is not described again. After successfully performing random access, the second terminal device may further send an uplink message.

Step 1309: The second terminal device sends a second uplink message.

The second uplink message includes service data related to the inventory service, for example, the second uplink message may include at least one piece of data of an EPC of the second terminal device, a TID of the second terminal device, sensor data collected by the second terminal device, and storage area data of the second terminal device. This is not limited in this application.

The foregoing is merely an example. There may be another terminal device that sends an uplink message in the inventory procedure. A specific quantity of terminal devices that send the uplink message in the inventory procedure is not limited in this application. Other cases are not described again.

Step 1310: The access network device sends a second message to the core network device.

The second message includes the first uplink message, the second uplink message, and first location information. For example, the first location information is identification information of a TRP, a PRU, an RRU, a BBU, an RRU hub, a head end, an antenna, or a relay device that receives the first uplink message and the second uplink message. Alternatively, the first location information is area information, for example, an area identifier, corresponding to a PRU, an RRU, a BBU, an RRU hub, a head end, an antenna, or a relay device. For another example, the first location information is cell identification information of a cell in which the first terminal device and the second terminal device are located.

The access network device may send the second message after a round of inventory procedure ends, or may send the second message in another case. A quantity of uplink messages included in the second message is not limited in this application.

Optionally, the second message further includes a first measurement result and a third measurement result. The first measurement result is obtained by measuring the first uplink message. The third measurement result is obtained by measuring the second uplink message.

Optionally, step 1311: The core network device sends the first measurement result and the third measurement result to an LMF network element.

Optionally, the core network device may determine second location information based on the first measurement result, and determine fourth location information based on the third measurement result.

Step 1312: The LMF network element sends the second location information and the fourth location information to the core network device.

A specific process in which the LMF network element determines the second location information and the fourth location information is not limited in this application. Details are not described herein again.

Step 1313: The core network device sends the first uplink message, the second uplink message, and the first location information to the server.

Optionally, the core network device may further send the second location information and the fourth location information to the server.

Alternatively, the core network device sends the first uplink message, the second uplink message, the second location information, and the fourth location information.

According to the foregoing procedure, the access network device may report first location information shared by a plurality of terminal devices to the network side via a single message. In this way, overhead for reporting location information can be reduced. Further, because the first location information is information with higher precision than cell-level location information, accuracy/a granularity of reported location information can be improved. Further, in service procedures such as the inventory procedure, an uplink message of the terminal device is measured, so that location information of the terminal device can be more accurately determined based on a measurement result, and existing uplink data or control information sent by the terminal can be reused for positioning, thereby improving accuracy of obtained location information and helping reduce signaling overhead.

In the procedure in FIG. 11, the access network device may also indicate the terminal device to send a positioning signal, to measure the positioning signal, and determine location information of the terminal device based on a measurement result. Details are described below.

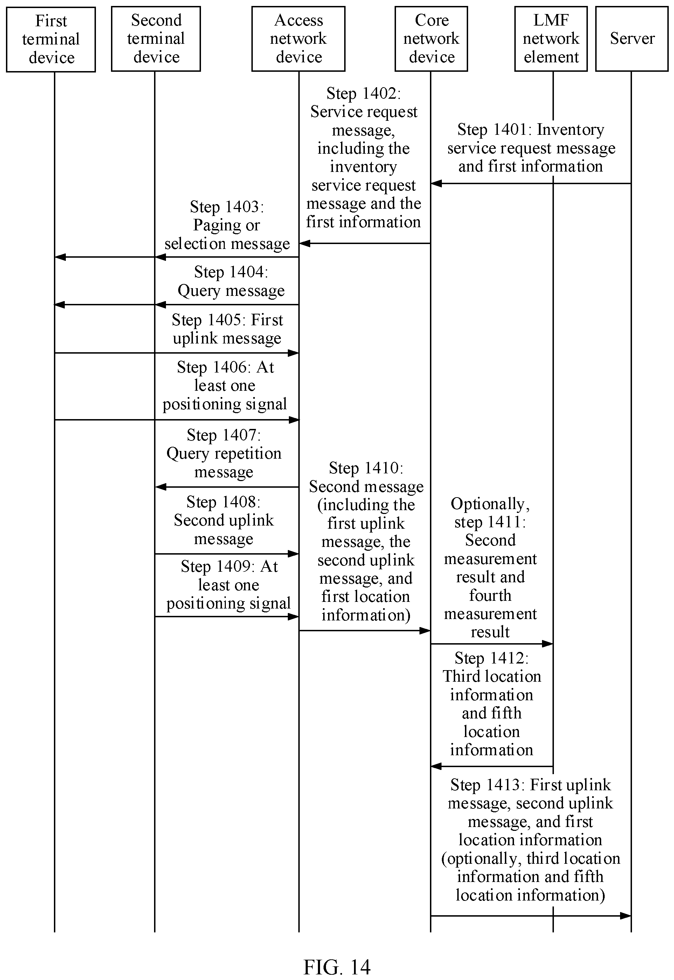

FIG. 14 is a diagram of an inventory procedure. Names of messages in the following procedure are merely examples, and there may be other message names. Details are not described herein again.

Optionally, step 1401: A server sends an inventory service request message and first information to a core network device.

Step 1402: The core network device sends a service request message to an access network device, where the service request message includes the inventory service request message and the first information.

For specific content of step 1401 and step 1402, refer to the description in step 1301 and step 1302. Details are not described herein again.

Step 1403: The access network device sends a paging or selection message, to select or page at least one terminal device.

The paging or selection message includes mask (mask) information. If mask information included in a terminal device matches the mask information included in the paging or selection message, it indicates that the terminal device is selected or paged.

The paging or selection message may further include session information and/or action information. For details, refer to the foregoing descriptions. Details are not described herein again.

Optionally, the paging or selection message may further include positioning configuration information. For specific content of the positioning configuration information, refer to the foregoing descriptions.

Step 1404: The access network device sends a query message, where the query message is used to initialize an inventory cycle.

For specific content of step 1404, refer to the descriptions in step 1304. Details are not described herein again.

It is assumed that a first terminal device is selected or paged. After receiving the query message, the first terminal device may initiate random access. Specific steps of the random access process are not described again. For details, refer to the foregoing descriptions. If successfully performing random access, the first terminal device may perform step 1405 and step 1406.

Step 1405: The first terminal device sends a first uplink message.

Step 1406: The first terminal device sends at least one positioning signal.

The first terminal device sends the at least one positioning signal based on the positioning configuration information.

Optionally, the access network device may indicate a relay device to send a carrier signal to the first terminal device, and the first terminal device may determine the positioning signal based on the carrier signal. The access network device may indicate the relay device to send carrier signals at different frequency positions, so that positioning signals determined by the first terminal device based on the carrier signal are located at different frequency positions, thereby helping improve positioning accuracy. The relay device may be a terminal device, or may be another device having a wireless transceiver function.

For example, the at least one positioning signal includes a first positioning signal and a second positioning signal, the first positioning signal is determined based on a first carrier signal from a third terminal device, the second positioning signal is determined based on a second carrier signal from the third terminal device, and a frequency position of the first carrier signal is different from a frequency position of the second carrier signal.

The access network device measures the at least one positioning signal, to obtain a second measurement result. For content included in the second measurement result, refer to the foregoing descriptions. Details are not described herein again.

The first terminal device may repeatedly send a plurality of positioning signals. Optionally, the access network device may send stop indication information, where the stop indication information indicates to stop sending the positioning signal. Correspondingly, the first terminal device may stop sending the positioning signal based on the stop indication information.

After data transmission of the inventory service is completed between the access network device and the first terminal device, the access network device may send a query repetition message to trigger a next slot.

Step 1407: The access network device sends the query repetition message.

It is assumed that a second terminal device is selected or paged, and a counter obtained after the second terminal device receives the query repetition message is 0. In this case, the second terminal device may perform a random access process. A specific procedure is not described again. After successfully performing random access, the second terminal device may further send an uplink message.

Step 1408: The second terminal device sends a second uplink message.

Step 1409: The second terminal device sends at least one positioning signal.

The access network device measures the at least one positioning signal, to obtain a fourth measurement result.

The foregoing is merely an example. There may be another terminal device that sends an uplink message and a positioning signal in the inventory procedure. A specific quantity of terminal devices that send the uplink message and the positioning signal in the inventory procedure is not limited in this application. Other cases are not described again.

Step 1410: The access network device sends a second message to the core network device.

The second message includes the first uplink message, the second uplink message, and first location information.

The access network device may send the second message after a round of inventory procedure ends, or may send the second message in another case. A quantity of uplink messages included in the second message is not limited in this application.

Optionally, the second message further includes the second measurement result and the fourth measurement result.

Optionally, step 1411: The core network device sends the second measurement result and the fourth measurement result to an LMF network element.

Optionally, the core network device may determine third location information based on the second measurement result, and determine fifth location information based on the fourth measurement result.

Step 1412: The LMF network element sends the third location information and the fifth location information to the core network device.

A specific process in which the LMF network element determines the third location information and the fifth location information is not limited in this application. Details are not described herein again.

Step 1413: The core network device sends the first uplink message, the second uplink message, and the first location information to the server.

Optionally, the core network device may further send the third location information and the fifth location information to the server.

In this application, each time after receiving one uplink message, the access network device may send, to the core network device, one message that includes the one uplink message and one piece of location information. For details, refer to the following procedure.

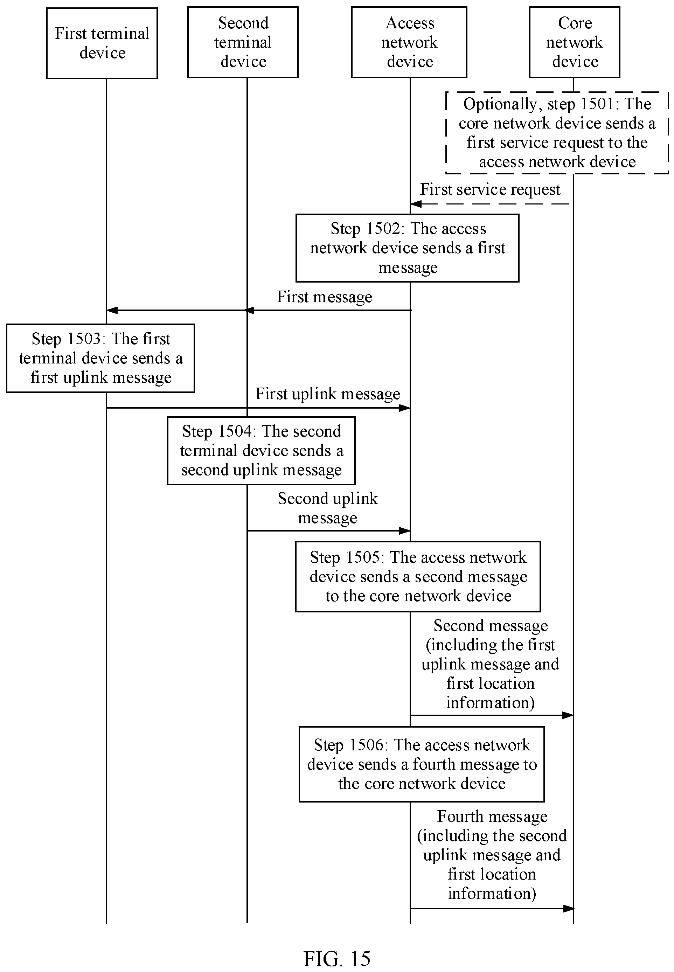

FIG. 15 is a schematic flowchart of a communication method according to an embodiment of this application. The method includes the following steps.

Optionally, step 1501: A core network device sends a first service request to an access network device.

Correspondingly, the access network device receives the first service request.

For example, the first service request is used to request to perform a first service, where the first service includes one or more of the following: a paging service, a positioning service, a location reporting service, an inventory service, a sensing service, a command service, a read service, a write service, and a kill service.

In an implementation, the core network device may further send first information, where the first information indicates to report location information of a terminal device. It may be understood that the first information indicates to report the location information of the terminal device, and an area range of the location information, of the terminal device, indicated to be reported by the first information is smaller than a cell-level area range, for example, indicates an area or a location of the terminal device in a cell. The "cell" herein is a cell in which the terminal device is located, and the cell belongs to the access network device. Optionally, the first information may indicate to report a TRP corresponding to the location of the terminal device in the cell or area information of the TRP. The TRP may alternatively be replaced with a pico radio unit (Pico Radio Unit, PRU), a pico remote radio unit (Pico Remote Radio Unit, pRRU), an RRU, a BBU, an RRU hub, a head end, an antenna, or a relay device.

In an implementation, the core network device may further send second information, where the second information indicates to measure a message or a signal of the terminal device. Optionally, the second information further indicates a measurement quantity. For example, the measurement quantity may include at least one of an angle, signal strength, and time of arrival.

In this application, the first service request, the first information, and the second information may be separately sent; or the core network device may include at least one of the first information and the second information in the first service request; or the core network device may include the first service request in the first information or the second information. How the core network device specifically sends the first service request, the first information, and the second information is not limited in this application.

Optionally, before sending the first service request, the core network device may receive at least one of a second service request and the first information from a server. The server may be an external server, for example, an internet of things server, a user server, or a factory server. For details, refer to the description in 1001. Details are not described herein again.

In this application, the core network device may be a network element like a tag management function (tag management function, TMF) network element or an AMF, or an ambient internet of things management function (ambient IoT management function, AIoTMF) network element, or may be another network element. This is not limited in this application.

Step 1502: The access network device sends a first message, where the first message is used to select or page at least one terminal device.

The terminal device is a passive device, a semi-passive device, or an active device; or the terminal device is an ambient internet of things terminal device, for example, the terminal device is a tag.

In this application, the first message may be used to page or select at least one terminal device, or trigger the at least one terminal device to send an uplink message or initiate access to a network. For details, refer to the description in 1002. Details are not described herein again.

In this application, the access network device may send the first message via a relay device. The relay device may be a terminal device, or may be another device like an IAB node. For example, FIG. 5 is used as an example. The terminal device is a tag, and the relay device is an IAB node. After the access network device sends the first message, the IAB node receives the first message, and forwards the first message to the tag.

In this application, an example in which a first terminal device and a second terminal device are selected or paged by the first message is used. A quantity of terminal devices that are actually selected or paged may be greater than 2. Other cases are not described again.

Step 1503: The first terminal device sends a first uplink message.

Step 1504: The second terminal device sends a second uplink message.

Correspondingly, the access network device receives the first uplink message and the second uplink message.

Before the first terminal device sends the first uplink message and before the second terminal device sends the second uplink message, a connection to the access network device may be first set up in a random access process. A specific process is not described again.

In this application, the terminal device may send the uplink message to the access network device via the relay device. For example, FIG. 5 is used as an example. The first terminal device is a tag, and the relay device is an IAB node. After the first terminal device sends the first uplink message, the IAB node receives the first uplink message, and forwards the first uplink message to the access network device.

The first uplink message may include first data of the first terminal device, and the first data may include at least one piece of data of an electronic product code (electronic product code, EPC) of the first terminal device, a tag identifier (tag identifier, TID) of the first terminal device, sensor data collected by the first terminal device, or storage area data of the first terminal device. This is not limited in this application. Similarly, the second uplink message may include second data of the second terminal device.

Each terminal device may send a plurality of uplink messages. Herein, an example in which one terminal device sends one uplink message is used for description. A quantity of uplink messages sent by each terminal device is not limited in this application. After receiving an uplink message from one terminal device, the access network device may further send a downlink message to the terminal device. A specific process is not limited in this application.

The first uplink message may be a NAS message. For example, the first uplink message is a NAS message in an UL NAS TRANSPORT format. An uplink message structure is not limited. Details are not described herein again.

The first uplink message and the second uplink message may be messages related to a service requested by the first service request. For example, the first uplink message and the second uplink message each include service data requested by the first service request.

Step 1505: The access network device sends a second message to the core network device, where the second message includes the first uplink message and first location information, and the first location information indicates a location of the first terminal device.

Correspondingly, the core network device receives the second message from the access network device.

Step 1506: The access network device sends a fourth message to the core network device, where the fourth message includes the second uplink message and first location information, and the first location information indicates a location of the second terminal device.

Correspondingly, the core network device receives the fourth message from the access network device.

In this application, the core network device may be an AMF network element, a TMF network element, an LMF network element, an ambient internet of things management function network element, an internet of things server, or the like. This is not limited in this application.

In an implementation, the first location information may include at least one of the following:
identification information of a TRP; identification information of a PRU; identification information of an RRU; identification information of a BBU; identification information of an RRU hub; identification information of a head end; identification information of an antenna; identification information of a relay device; identification information of a cell; identification information of a reader; identification information of an A-IoT reader; an NR CGI; sector information of an active antenna processing unit (active antenna unit, AAU); information about a tracking area (tracking area); identification information of an AIoTMF; identification information of the TMF; a beam angle; distance information; and a coverage level.

The NR CGI is an identifier of a cell in which the terminal device is located.

In another implementation, the first location information may be information about areas in which the first terminal device and the second terminal device are located. For example, the first location information is an area identifier, and one area identifier corresponds to one area in the cell.

For example, the first location information may include at least one of the following:
area information of a TRP; area information of a PRU; area information of an RRU; area information of a BBU; area information of an RRU hub; area information of a head end; area information of an antenna; area information of a relay device; area information of a cell; area information of a reader; and area information of an A-IoT reader. An area corresponding to the area information of the TRP, the PRU, the RRU, the BBU, the RRU hub, the head end, the antenna, the relay device, the cell, the reader, or the A-IoT reader is a part of the cell.

For specific content of the first location information, refer to the description in the procedure in FIG. 10. Details are not described herein again.

The first location information may further include a UE temporary identity (for example, a 5G-serving-temporary mobile subscriber identity (serving-temporary mobile subscriber identity, s-TMSI) or a temporary mobile group identity (temporary mobile group identity, TMGI)) or an AMF UE NGAP identity. The NGAP is a next generation application protocol (next generation application protocol). The AMF/TMF or another core network device may associate or match received location information with a corresponding uplink message.

In this application, if the uplink message sent by the terminal device is not a NAS message, the access network device may also parse the uplink message to obtain message content in the uplink message, to re-encapsulate the message content and the location information into a new message, and send the new message to the core network device.

Optionally, the core network device may send the first location information to the server. For example, after receiving the second message, the core network device obtains the first uplink message, the second uplink message, and the first location information in the second message, and the core network device may send the first uplink data in the first uplink message, the second uplink data in the second uplink message, and the first location information to the server.

It may be understood that, to implement functions in the foregoing embodiments, the access network device, the terminal device, or the core network device includes corresponding hardware structures and/or software modules for performing the functions. A person skilled in the art should easily be aware that, in combination with the units and method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

The following are diagrams of possible structures of communication apparatuses according to embodiments of this application. The communication apparatuses may be configured to implement a function of the access network device, the terminal device, or the core network device in the foregoing method embodiments, and therefore can also implement beneficial effects of the foregoing method embodiments.

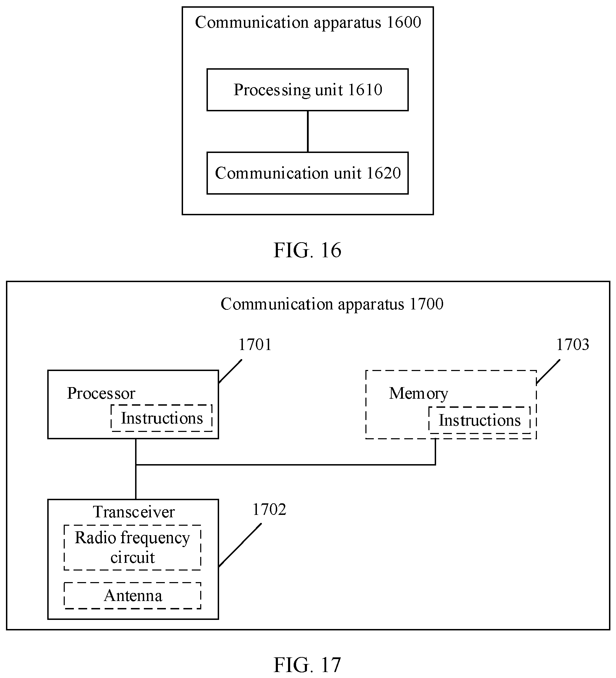

As shown in FIG. 16, a communication apparatus 1600 includes a processing unit 1610 and a communication unit 1620. The communication apparatus 1600 is configured to implement a function of the terminal device or the network device in various method embodiments shown above.

In an implementation, the communication apparatus 1600 is configured to implement the following functions:
the processing unit is configured to send a first message via the communication unit, where the first message is used to select or page at least one terminal device;
the processing unit is configured to: receive, via the communication unit, a first uplink message from a first terminal device, and receive a second uplink message from a second terminal device; and
the processing unit is configured to send a second message to the core network device via the communication unit, where the second message includes the first uplink message, the second uplink message, and first location information, and the first location information indicates a location of the first terminal device and the second terminal device.

In an implementation, the communication apparatus 1600 is configured to implement the following functions:
the communication unit, configured to receive a second message from an access network device, where the second message includes first location information, a first uplink message of a first terminal device, and a second uplink message of a second terminal device, and the first location information indicates a location of the first terminal device and the second terminal device.

For more detailed descriptions about the processing unit 1610 and the communication unit 1620, directly refer to related descriptions in the foregoing method embodiments. Details are not described herein again.

It should be understood that division of the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or the part of units may be implemented in a form of software invoked by a processing element, and the part of units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or a part of the units may be integrated, or may be implemented independently. The processing element herein may also be a processor, and may be an integrated circuit having a signal processing capability. In an implementation process, operations in the foregoing methods or the foregoing units may be implemented via a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

In another possible product form, the access network device, the terminal device, or the core network device in embodiments of this application may be implemented by using a general bus architecture. For ease of description, refer to FIG. 17. FIG. 17 is a diagram of a structure of a communication apparatus 1700 according to an embodiment of this application. The communication apparatus 1700 includes a processor 1701 and a transceiver 1702. The communication apparatus 1700 may be a terminal device, or a chip or a chip system in the terminal device. Alternatively, the communication apparatus 1700 may be a network device, or a chip or a module in the network device. FIG. 17 shows only main components of the communication apparatus 1700. In addition to the processor 1701 and the transceiver 1702, the communication apparatus 1700 may further include a memory 1703 and an input/output apparatus (which is not shown in the figure).

Optionally, the processor 1701 is mainly configured to: process a communication protocol and communication data, control the entire communication apparatus, execute a software program, and process data of the software program. The memory 1703 is mainly configured to store the software program and the data. The transceiver 1702 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, a keyboard, is mainly configured to: receive data from a user and output data to the user.

Optionally, the processor 1701, the transceiver 1702, and the memory 1703 may be connected through a communication bus.

After the communication apparatus is powered on, the processor 1701 may read the software program in the memory 1703, interpret and execute instructions of the software program, and process data of the software program. When data needs to be sent wirelessly, the processor 1701 performs baseband processing on the to-be-sent data, and then outputs a baseband signal to a radio frequency circuit. The radio frequency circuit performs radio frequency processing on the baseband signal, and then sends a radio frequency signal to the outside in a form of electromagnetic wave through the antenna. When data is to be sent to the communication apparatus, the radio frequency circuit receives a radio frequency signal through the antenna, converts the radio frequency signal into a baseband signal, and outputs the baseband signal to the processor 1701. The processor 1701 converts the baseband signal into data, and processes the data.

In another implementation, the radio frequency circuit and the antenna may be disposed independently of the processor for baseband processing. For example, in a distributed scenario, the radio frequency circuit and the antenna may be remotely disposed independently of the communication apparatus.

In some embodiments, in hardware implementation, a person skilled in the art may figure out that the communication apparatus 1600 may be in a form of the communication apparatus 1700 shown in FIG. 17.

In an example, functions/implementation processes of the processing unit 1610 in FIG. 16 may be implemented by the processor 1701 in the communication apparatus 1700 shown in FIG. 17 by invoking computer-executable instructions stored in the memory 1703. A function/implementation process of the communication unit 1620 in FIG. 16 may be implemented by the transceiver 1702 in the communication apparatus 1700 shown in FIG. 17.

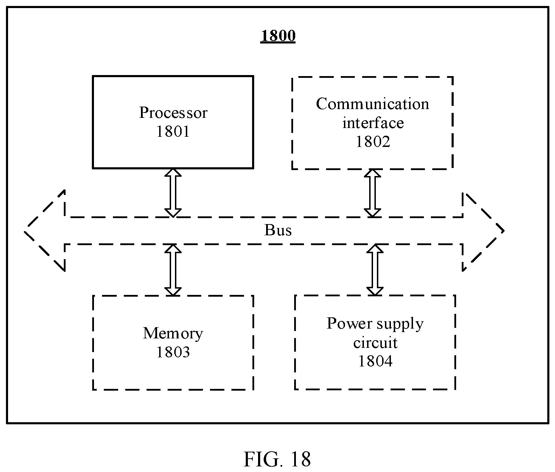

In still another possible product form, the network device or the terminal device in this application may use a composition structure shown in FIG. 18, or include components shown in FIG. 18. FIG. 18 is a diagram of composition of a communication apparatus 1800 according to this application.

As shown in FIG. 18, the communication apparatus 1800 includes at least one processor 1801. Optionally, the communication apparatus further includes a communication interface 1802.

When related program instructions are executed in the at least one processor 1801, the communication apparatus 1800 may be enabled to implement the method provided in any one of the foregoing embodiments and any possible design of the method. Alternatively, the processor 1801 is configured to implement, via a logic circuit or by executing code instructions, the method provided in any one of the foregoing embodiments and any possible design thereof.

The communication interface 1802 may be configured to receive the program instructions, and transmit the program instructions to the processor. Alternatively, the communication interface 1802 may be configured to perform communication interaction between the communication apparatus 1800 and another communication device, for example, exchange control signaling and/or service data. For example, the communication interface 1802 may be configured to receive a signal from an apparatus other than the communication apparatus 1800, and transmit the signal to the processor 1801; or send a signal from the processor 1801 to a communication apparatus other than the communication apparatus 1800.

Optionally, the communication interface 1802 may be a code and/or data read/write interface circuit, or the communication interface 1802 may be a signal transmission interface circuit between a communication processor and a transceiver, or a pin of a chip.

Optionally, the communication apparatus 1800 may further include at least one memory 1803, and the memory 1803 may be configured to store the related program instructions and/or data needed. It should be noted that the memory 1803 may be independent of the processor 1801, or may be integrated with the processor 1801. The memory 1803 may be located inside the communication apparatus 1800, or may be located outside the communication apparatus 1800. This is not limited.

Optionally, the communication apparatus 1800 may further include a power supply circuit 1804, and the power supply circuit 1804 may be configured to supply power to the processor 1801. The power supply circuit 1804 may be located in a same chip as the processor 1801, or may be located in a chip other than a chip in which the processor 1801 is located.

Optionally, the communication apparatus 1800 may further include a bus, and parts of the communication apparatus 1800 may be interconnected through the bus.

In some embodiments, in hardware implementation, a person skilled in the art may figure out that the communication apparatus 1600 shown in FIG. 16 may be in a form of the communication apparatus 1800 shown in FIG. 18.

In an example, functions/implementation processes of the processing unit 1610 in FIG. 16 may be implemented by the processor 1801 in the communication apparatus 1800 shown in FIG. 18 by invoking computer-executable instructions stored in the memory 1803. A function/implementation process of the communication unit 1620 in FIG. 16 may be implemented by the communication interface 1802 in the communication apparatus 1800 shown in FIG. 18.

It should be noted that the structure shown in FIG. 18 does not constitute a specific limitation on the terminal device or the network device. For example, in some other embodiments of this application, the terminal device or the network device may include more or fewer components than those shown in the figure, or a combination of a part of the components, or splits from a part of the components, or an arrangement of different components. The components shown in the figure may be implemented by hardware, software, or a combination of software and hardware.

When the communication apparatus is a chip used in a terminal, the chip in the terminal implements a function of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the foregoing communication apparatus is a module used in a base station, the base station module implements a function of the base station in the foregoing method embodiment. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
sending a first message, wherein the first message is used to select or page at least one terminal device;
receiving a first uplink message from a first terminal device, and receiving a second uplink message from a second terminal device; and
sending a second message to the core network device, wherein the second message comprises the first uplink message, the second uplink message, and first location information, and the first location information indicates a location of the first terminal device and the second terminal device.

2. The method according to claim 1, wherein the method further comprises:
receiving a first service request from the core network device, wherein the first service request is used to request a first service; and
the first service comprises one or more of the following: a paging service, a positioning service, a location reporting service, an inventory service, a sensing service, a command service, a read service, a write service, and a kill service.

3. The method according to claim 1 or 2, wherein the first location information comprises at least one of the following:
identification information of a transmission reception point TRP; identification information of a pico radio unit PRU; identification information of a head end; identification information of an antenna; and identification information of a relay device, wherein
the TRP, the PRU, the head end, or the antenna is configured to receive the first uplink message and the second uplink message, and the relay device is configured to forward the first uplink message and the second uplink message.

4. The method according to claim 1 or 2, wherein the first location information comprises at least one of the following:
area information corresponding to a TRP; area information corresponding to a PRU; area information corresponding to a head end; area information corresponding to an antenna; and area information corresponding to a relay device, wherein
the TRP, the PRU, the head end, or the antenna is configured to receive the first uplink message and the second uplink message, and the relay device is configured to forward the first uplink message and the second uplink message.

5. The method according to claim 4, wherein an area corresponding to the area information is a part of a cell.

6. The method according to any one of claims 2 to 5, wherein the first service request further comprises first information, and the first information indicates to report location information of a terminal device.

7. The method according to any one of claims 1 to 6, wherein the method further comprises:
measuring the first uplink message to obtain a first measurement result; and
sending the first measurement result to the core network device, wherein the first measurement result is used to determine second location information of the first terminal device.

8. The method according to any one of claims 1 to 6, wherein the method further comprises:
sending positioning configuration information, wherein the positioning configuration information is used to transmit a positioning signal;
receiving at least one positioning signal from the first terminal device;
measuring the at least one positioning signal to obtain a second measurement result; and
sending the second measurement result to the core network device, wherein the second measurement result is used to determine third location information of the first terminal device.

9. The method according to claim 8, wherein the positioning configuration information comprises at least one of the following:
a transmission periodicity of the positioning signal, a transmission count of the positioning signal, a positioning signal type, a transmission time period of the positioning signal, a transmission time offset of the positioning signal, a frequency of the positioning signal, and an absolute transmission time of the positioning signal.

10. The method according to claim 8 or 9, wherein the at least one positioning signal comprises a first positioning signal and a second positioning signal; and
the first positioning signal is determined based on a first carrier signal from a third terminal device, the second positioning signal is determined based on a second carrier signal from the third terminal device, and a frequency position of the first carrier signal is different from a frequency position of the second carrier signal.

11. A communication method, comprising:
receiving a second message from an access network device, wherein the second message comprises first location information, a first uplink message of a first terminal device, and a second uplink message of a second terminal device, and the first location information indicates a location of the first terminal device and the second terminal device.

12. The method according to claim 11, wherein the method further comprises:
sending a first service request to the access network device, wherein the first service request is used to request to perform a first service; and
the first service comprises one or more of the following: a paging service, a positioning service, a location reporting service, an inventory service, a sensing service, a command service, a read service, a write service, and a kill service.

13. The method according to claim 11 or 12, wherein the first location information comprises at least one of the following:
identification information of a transmission reception point TRP; identification information of a pico radio unit PRU; identification information of a head end; identification information of an antenna; and identification information of a relay device, wherein
the TRP, the PRU, the head end, or the antenna is configured to receive the first uplink message and the second uplink message, and the relay device is configured to forward the first uplink message and the second uplink message.

14. The method according to claim 11 or 12, wherein the first location information comprises at least one of the following:
area information corresponding to a TRP; area information corresponding to a PRU; area information corresponding to a head end; area information corresponding to an antenna; and area information corresponding to a relay device, wherein
the TRP, the PRU, the head end, or the antenna is configured to receive the first uplink message and the second uplink message, and the relay device is configured to forward the first uplink message and the second uplink message.

15. The method according to claim 14, wherein an area corresponding to the area information is a part of a cell.

16. The method according to any one of claims 11 to 15, wherein the first service request further comprises first information, and the first information indicates to report location information of a terminal device in the cell.

17. The method according to any one of claims 11 to 16, wherein the method further comprises:
receiving a first measurement result from the access network device, wherein the first measurement result is determined based on the first uplink message, and the first measurement result is used to determine second location information of the first terminal device.

18. A communication apparatus, comprising:
a processing unit, configured to send a first message via a communication unit, wherein the first message is used to select or page at least one terminal device;
the processing unit is configured to: receive, via the communication unit, a first uplink message from a first terminal device, and receive a second uplink message from a second terminal device; and
the processing unit is configured to send a second message to the core network device via the communication unit, wherein the second message comprises the first uplink message, the second uplink message, and first location information, and the first location information indicates a location of the first terminal device and the second terminal device.

19. The apparatus according to claim 18, wherein the first location information comprises at least one of the following:
identification information of a transmission reception point TRP; identification information of a pico radio unit PRU; identification information of a head end; identification information of an antenna; and identification information of a relay device, wherein
the TRP, the PRU, the head end, or the antenna is configured to receive the first uplink message and the second uplink message, and the relay device is configured to forward the first uplink message and the second uplink message.

20. The apparatus according to claim 18, wherein the first location information comprises at least one of the following:
area information corresponding to a TRP; area information corresponding to a PRU; area information corresponding to a head end; area information corresponding to an antenna; and area information corresponding to a relay device, wherein
the TRP, the PRU, the head end, or the antenna is configured to receive the first uplink message and the second uplink message, and the relay device is configured to forward the first uplink message and the second uplink message.

21. The apparatus according to any one of claims 18 to 20, wherein the communication unit is further configured to:
measure the first uplink message, to obtain a first measurement result; and
send the first measurement result to the core network device, wherein the first measurement result is used to determine second location information of the first terminal device.

22. The apparatus according to any one of claims 18 to 21, wherein the communication unit is further configured to:
send positioning configuration information, wherein the positioning configuration information is used to transmit a positioning signal;
receive at least one positioning signal from the first terminal device;
measure the at least one positioning signal, to obtain a second measurement result; and
send the second measurement result to the core network device, wherein the second measurement result is used to determine third location information of the first terminal device.

23. A communication apparatus, comprising:
a communication unit, configured to receive a second message from an access network device, wherein the second message comprises first location information, a first uplink message of a first terminal device, and a second uplink message of a second terminal device, and the first location information indicates a location of the first terminal device and the second terminal device.

24. The apparatus according to claim 23, wherein the first location information comprises at least one of the following:
identification information of a transmission reception point TRP; identification information of a pico radio unit PRU; identification information of a head end; identification information of an antenna; and identification information of a relay device, wherein
the TRP, the PRU, the head end, or the antenna is configured to receive the first uplink message and the second uplink message, and the relay device is configured to forward the first uplink message and the second uplink message.

25. The apparatus according to claim 23 or 24, wherein the first location information comprises at least one of the following:
area information corresponding to a TRP; area information corresponding to a PRU; area information corresponding to a head end; area information corresponding to an antenna; and area information corresponding to a relay device, wherein
the TRP, the PRU, the head end, or the antenna is configured to receive the first uplink message and the second uplink message, and the relay device is configured to forward the first uplink message and the second uplink message.

26. A communication apparatus, comprising a processor and a memory, wherein
the processor is configured to execute a computer program or instructions stored in the memory, to cause the communication apparatus to implement the method according to any one of claims 1 to 17.

27. A computer-readable storage medium, storing a computer program or instructions, wherein when the computer program or the instructions are run on a computer, the computer is caused to implement the method according to any one of claims 1 to 17.

28. A chip, comprising a processor, wherein the processor is coupled to a memory, and is configured to execute a computer program or instructions stored in the memory, to cause the chip to implement the method according to any one of claims 1 to 17.

29. A computer program product, wherein when a computer reads and executes the computer program product, the method according to any one of claims 1 to 17 is performed.
